(19) Europäisches Patentamt
European Patent Office
Office européen des brevets

(11) **EP 3 816 930 B1**

(12) **EUROPÄISCHE PATENTSCHRIFT**

(45) Veröffentlichungstag und Bekanntmachung des Hinweises auf die Patenterteilung:
**08.04.2026 Patentblatt 2026/15**

(21) Anmeldenummer: **19205908.7**

(22) Anmeldetag: **29.10.2019**

(51) Internationale Patentklassifikation (IPC):
**G06T 5/50** *(2006.01)* **G06T 5/60** *(2024.01)*

(52) Gemeinsame Patentklassifikation (CPC):
**G06T 5/50; G06T 5/60;** G06T 2207/10016; G06T 2207/10081; G06T 2207/20056; G06T 2207/20081; G06T 2207/20084

(54) **COMPUTERIMPLEMENTIERTES VERFAHREN ZUR BEREITSTELLUNG EINES AUSGANGSDATENSATZES MIT VERBESSERTER BILDQUALITÄT**

COMPUTER-IMPLEMENTED METHOD FOR PROVIDING AN OUTPUT DATASET WITH IMPROVED IMAGE QUALITY

PROCÉDÉ MIS EN OEUVRE PAR ORDINATEUR PERMETTANT DE FOURNIR UN ENSEMBLE DE DONNÉES DE SORTIE À QUALITÉ D'IMAGE AMÉLIORÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**05.05.2021 Patentblatt 2021/18**

(73) Patentinhaber: **Siemens Healthineers AG 91301 Forchheim (DE)**

(72) Erfinder:
• **Baer-Beck, Matthias 91054 Erlangen (DE)**
• **Flohr, Thomas 91486 Uehlfeld (DE)**
• **Stierstorfer, Karl 91052 Erlangen (DE)**

(74) Vertreter: **Siemens Healthineers Patent Attorneys Postfach 22 16 34 80506 München (DE)**

(56) Entgegenhaltungen:
EP-A1- 3 244 368 EP-A1- 3 467 766
DE-A1- 102012 206 714

## Beschreibung

Die Erfindung betrifft ein Computerimplementiertes Verfahren zur Bereitstellung eines Ausgangsdatensatzes mit einem gegenüber einem gewählten Eingangsdatensatz reduzierten Rauschen, wobei der gewählte Eingangsdatensatz und wenigstens ein das gleiche Untersuchungsobjekt betreffender weiterer Eingangsdatensatz durch ein medizinisches Bildgebungsverfahren ermittelt sind, wobei der weitere Eingangsdatensatz zu dem gewählten Eingangsdatensatz registriert ist oder wird. Daneben betrifft die Erfindung eine Bereitstellungseinrichtung, eine medizinische Bildgebungseinrichtung, ein Computerprogramm sowie einen Computerlesbaren Datenträger.

Bei einigen Verfahren der medizinischen Bildgebung wird das gleiche Untersuchungsobjekt bzw. die gleiche Anatomie mehrmals erfasst. Dies wird auch als Multiphasen-Bildgebung bezeichnet. Die Mehrfacherfassung kann beispielsweise dazu dienen, verschiedene Bewegungsphasen eines Organs, beispielsweise unterschiedliche Herz- bzw. Atmungsphasen, zu erfassen. Ergänzend oder alternativ können beispielsweise mehrere Aufnahmen bei unterschiedlichem Kontrastmittelgehalt des Untersuchungsobjekts, Aufnahmen mit unterschiedlichen Bildparametern, etc. durchgeführt werden. Dies führt dazu, dass zumindest für einige Bereiche des Untersuchungsobjekts redundante Informationen vorliegen, die zur Rauschreduktion und/oder zur Dosisreduktion genutzt werden können.

Im Stand der Technik sind bereits einige Ansätze bekannt, Bilddaten aus mehreren Phasen der Bildgebung, also Bilddaten, die zu unterschiedlichen Zeiten bzw. mit unterschiedlichen Parametern erfasst wurden, zu kombinieren, um eine Bildqualität zu verbessern. So schlägt beispielsweise der Artikel Brehm, M., et al. (2015), Cardiorespiratory motion-compensated micro-CT image reconstruction using an artifact model-based motion estimation. Med. Phys., 42: 1948-1958, doi:10.1118/1.4916083, vor, zu verschiedenen Zeitpunkten bzw. Phasen der Bildgebung erfasste Bildaufnahmen eines Computertomographen zu registrieren, indem anhand eines Bewegungsmodells Bewegungen aufgrund von Atmung und Herzbewegung kompensiert werden. Hierdurch steht für die einzelne Rekonstruktion eine größere Menge von Bilddaten zur Verfügung, da die separaten Phasen nicht separat rekonstruiert werden müssen, wodurch die Bildqualität erhöht werden kann.

Der Artikel Sawall, S., et al. (2011), Low-dose cardio-respiratory phase-correlated cone-beam micro-CT of small animals. Med. Phys., 38: 1416-1424, doi:10.1118/1.3551993, nutzt eine hochdimensionale Filterfunktion, um die Bildqualität zu verbessern. Hierbei wird zusätzlich zu den drei Raumdimensionen des einzelnen Bilddatensatzes eine jeweilige zusätzliche Dimension genutzt, in der die verschiedenen Herz- und Atemphasen angeordnet sind. Um ein zu starkes verschmieren von Kanten im Bild zu vermeiden, wird eine bilaterale Filterung genutzt.

Eine Nutzung von bilateralen Filtern zur Verbesserung der Bildqualität wird beispielsweise auch in den Artikeln Ehman, E. C., et al. (2012), Noise Reduction to Decrease Radiation Dose and Improve Conspicuity of Hepatic Lesions at Contrast-Enhanced 80-kV Hepatic CT Using Projection Space Denoising, AJR Am J Roentgenol. 2012 Feb;198(2):405-11, doi: 10.2214/AJR.11.6987, und Tomasi, C., et al. (1998), Bilateral Filtering for Grey and Color Images, proceedings of the 1998 IEEE International Conference on Computer Vision, Bombay, India, beschrieben.

Aus dem Artikel Kang, E., et al. (2019), Cycle-consistent adversarial denoising network for multiphase coronary CT angiography, Med. Phys., 46: 550-562, doi:10.1002/mp.13284, ist es zudem bekannt, Ansätze des Maschinenlernens zu nutzen, um eine Bildqualität zu verbessern.

DE 10 2012 206714 A1 offenbart ein Verfahren zur Reduktion von Metallartefakten in CT-Bilddatensätzen.

EP 3 467 766 A1 offenbart ein medizinisches Bildverarbeitungsgerät, umfassend einen Speicher, der so konfiguriert ist, dass er mehrere neuronale Netze speichert, die mehreren Bildzielorten entsprechen.

EP 3 244 368 A1 offenbart eine Rauschunterdrückung, die einen Kompromiss aus minimaler Bestrahlung und Rauschreduktion in mehreren aufeinanderfolgenden 3D CT-Scans erreicht. Die Eingangssequenzen werden nach Attributen gefiltert und dann gewichtet summiert, wobei diese Attribute Frequenzen entsprechen können.

Der Erfindung liegt die Aufgabe zugrunde, einen demgegenüber alternativen Ansatz anzugeben, um das Rauschen bei gegebenen Bildgebungsbedingungen zu reduzieren.

Die Aufgabe wird erfindungsgemäß durch ein computerimplementiertes Verfahren nach Anspruch 1 gelöst.

Im Rahmen der Erfindung wurde erkannt, dass in dem Zwischendatensatz aufgrund der Kombination von Bilddaten mehrerer zueinander registrierter Eingangsdatensätze ein deutlich niedriges Rauschen erreicht werden kann. Die Bilddaten der verschiedenen Bilddatensätze können im einfachsten Fall durch Mittelwertbildung kombiniert werden. Es sind jedoch auch andere Kombinationsverfahren, beispielsweise eine Kombination mit Hilfe eines Verfahrens des Maschinenlernens oder mit Hilfe eines bilateralen Filters, möglich, wie später noch genauer erläutert werden wird. Nachteilig an einer derartigen Rauschreduktion ist es jedoch, dass hierbei versehentlich nicht nur Rauschen sondern auch reale Bildmerkmale aus dem Zwischendatensatz eliminiert werden können bzw. dort zumindest deutlich weniger sichtbar sein können als im gewählten Eingangsdatensatz.

Es wurde im Rahmen der Erfindung jedoch erkannt, dass dieser Nachteil deutlich reduziert oder sogar vollständig eliminiert werden kann, wenn eine frequenzabhängige Überlagerung des gewählten Eingangsdatensatzes und des Zwischendatensatzes erfolgt. Diese wird implementiert, indem jeweils wenigstens eine Filterfunktion auf diese Datensätze angewandt wird und die resultierenden gefilterten Datensätze, optional gewichtet, summiert werden.

Erfindungsgemäß werden ein Tiefpassfilter auf den gewählten Eingangsdatensatz und ein Hochpassfilter auf den Zwischendatensatz angewandt, wodurch erreicht wird, das tiefe Raumfrequenz dem gewählten Eingangsdatensatz, also dem unveränderten Originalbild, und hohe Frequenzanteile dem Zwischendatensatz, also dem vorverarbeiteten Bild, entnommen werden. Die häufig besonders relevanten niedrigen Raumfrequenzen werden so unverfälscht wiedergegeben, wobei dennoch ein niedriger Rauschpegel erreicht werden kann. Gegenüber einer ausschließlichen Anwendung eines Tiefpassfilters auf den gewählten Eingangsdatensatz wird der Vorteil erreicht, dass aufgrund der Bereitstellung der hohen Raumfrequenzen über den Zwischendatensatz feine Strukturen erheblich detaillierter abgebildet werden können.

Die obig erläuterte Nutzung genau einer Filterfunktion für den gewählten Eingangsdatensatz bzw. den Zwischendatensatz ist offensichtlich nur ein sehr einfaches Beispiel für das erfindungsgemäße Vorgehen. In vielen Anwendungsfällen ist es vorteilhaft, jeweils mehrere Filterfunktionen, insbesondere die gleichen Filterfunktionen, auf den gewählten Eingangsdatensatz und den Zwischendatensatz anzuwenden, um jeweils einen Bildinhalt für eine Vielzahl von Frequenzbändern zu ermitteln. Dies ermöglicht es, bedarfsgerecht verschiedene Frequenzbereiche der verschiedenen Datensätze verschieden zu gewichten. Dies wird später noch genau erläutert werden.

Die Filterfunktionen zur Bereitstellung des wenigstens einen gefilterten Eingangsdatensatz und des wenigstens einen gefilterten Zwischendatensatzes sollen vorzugsweise phasenerhaltend sein, um beispielsweise eine Phasenauslöschung bei der Überlagerung verschiedener gefilterter Datensätze zu vermeiden. Dies kann beispielsweise dadurch realisiert werden, dass der gewählte Eingangsdatensatz bzw. der Zwischendatensatz jeweils in den Fourierraum transformiert werden, in dem eine phasenerhaltende Filterung schlicht durch Multiplikation mit einer Einhüllenden erreicht werden kann. Eine entsprechende phasenerhaltende Filterung kann jedoch auch durch einen Faltungskernel erreicht werden, der beispielsweise bereitgestellt werden kann, indem eine entsprechende Einhüllende im Frequenzraum durch Fouriertransformation in den Ortsraum überführt wird.

Die Erfassung des gewählten Eingangsdatensatzes und der weiteren Eingangsdatensätze und/oder die Registrierung der weiteren Eingangsdatensätze zu dem gewählten Eingangsdatensatz können als vorbereitende Schritte vor Beginn des erfindungsgemäßen computerimplementierten Verfahrens durchgeführt werden. Beispielsweise können die aufgenommenen und optional bereits registrierten Eingangsdatensätze über eine Eingangsschnittstelle einer Bereitstellungseinrichtung bzw.- Routine bereitgestellt werden, die das computerimplementierte Verfahren implementiert. Alternativ können diese Schritte oder auch nur die Registrierung der Eingangsdatensätze zueinander auch Teil des Verfahrens sein.

Vorzugsweise wird eine Mehrzahl von weiteren Eingangsdatensätzen genutzt, beispielsweise wenigstens zwei weitere Eingangsdatensätze, wenigstens fünf weitere Eingangsdatensätze oder wenigstens zehn weitere Eingangsdatensätze. Durch das Registrieren der weiteren Eingangsdatensätze zu dem gewählten Eingangsdatensatz wird insbesondere erreicht, dass ein jeweiliger Bildpunkt bzw. Voxel an einer bestimmten Position in dem gewählten Eingangsdatensatz und in allen weiteren Eingangsdatensätzen jeweils näherungsweise den gleichen Bereich des Untersuchungsobjekts zeigt. Dies kann insbesondere erreicht werden, indem die weiteren Eingangsdatensätze elastisch zu dem gewählten Eingangsdatensatz registriert werden.

Der gewählte Eingangsdatensatz und die weiteren Eingangsdatensätze können insbesondere 3D-Bilddaten beschreiben, beispielsweise rekonstruierte Bilddaten eines Computertomographen, eines Magnetresonanztomographen, eines Positronenemissionstomographen oder Ähnliches. Das erfindungsgemäße Verfahren wird somit insbesondere nach einer Rekonstruktion von 3D-Bilddaten angewandt. Das erfindungsgemäße Verfahren kann jedoch auch auf 2D-Bilddaten als Eingangsdatensätze angewandt werden. Beispielsweise können 2D-Röntgenbilder oder andere 2D-Bilder einer medizinischen Bildaufnahmeeinrichtung verarbeitet werden. Es ist auch möglich, dass beispielsweise Einzelaufnahmen eines Computertomographen mit Hilfe des erfindungsgemäßen computerimplementierten Verfahrens verarbeitet werden, bevor eine Rekonstruktion durchgeführt wird.

Die Ausgangsdaten können nach Ende des erfindungsgemäßen computerimplementierten Verfahrens oder auch als Teil hiervon an einen Benutzer ausgegeben, weiterverarbeitet oder zur späteren Darstellung bzw. Verarbeitung auf einem Datenträger gespeichert werden. Eine Weiterverarbeitung kann beispielsweise eine automatische Segmentierung oder ein automatisches Erkennen von Merkmalen im Ausgangsdatensatz umfassend.

Die gefilterten Eingangsdatensätze können jeweils einem Frequenzbereich von Raumfrequenzen zugeordnet sein, wobei Raumfrequenzen außerhalb des jeweiligen zugeordneten Frequenzbereichs gegenüber dem gewählten Eingangsdatensatz durch Anwenden der jeweiligen Filterfunktion unterdrückt oder ihre Amplituden reduziert werden. Ergänzend oder alternativ können die gefilterten Zwischendatensätze jeweils einem Frequenzbereich von Raumfrequenzen zugeordnet sein, wobei Raumfrequenzen außerhalb des jeweiligen zugeordneten Frequenzbereichs gegenüber dem Zwischendatensatz durch Anwenden der jeweiligen Filterfunktion unterdrückt oder ihre Amplituden reduziert werden.

Insbesondere greift somit eine jeweilige Filterfunktion aus dem gewählten Eingangsdatensatz bzw. dem Zwischendatensatz die Raumfrequenzen des zugeordneten Frequenzbereiches heraus und verwirft die anderen Raumfrequenzen bzw. unterdrückt sie. Insbesondere sind die Amplituden von Raumfrequenzen außerhalb des zugeordneten Frequenzbereiches wenigstens um den Faktor 1,5, vorzugsweise jedoch um wenigstens den Faktor 2 oder 4 oder 8 oder 16 reduziert. Insbesondere, wenn eine Filterung auf Basis eines Faltungskernels oder mit Hilfe einer Fouriertransformation erfolgt, kann auch eine im Wesentlichen vollständige Unterdrückung von Frequenzen außerhalb des zugeordneten Frequenzbereiches erreicht werden. Innerhalb des zugeordneten Frequenzbereiches können die Amplituden der Raumfrequenzen im Wesentlichen erhalten bleiben, also beispielsweise durch Anwenden der Filterfunktion um maximal 10 % oder 20 % oder 50 % reduziert werden.

Durch die Aufteilung des gewählten Eingangsdatensatzes und des Zwischendatensatzes in mehrere Frequenzbereiche kann gewählt werden, in welchem Frequenzbereich im Ausgangsdatensatz bzw. im weiteren Zwischendatensatz Daten des gewählten Eingangsdatensatzes bzw. Daten des Zwischendatensatzes verwendet werden bzw. wie der gewählte Eingangsdatensatz und der Zwischendatensatz in diesem Frequenzbereich gewichtet werden. Insbesondere kann somit ein Satz Filterfunktionen, dessen zugeordnete Frequenzbereiche im Wesentlichen den gesamten Frequenzbereich aufspannen, einerseits auf den gewählten Eingangsdatensatz und andererseits auf den Zwischendatensatz angewandt werden. Durch entsprechende Wahl der Gewichtungsfaktoren für die resultierenden gefilterten Eingangs- bzw. Zwischendatensätze kann ein Zusammenführen des gewählten Eingangsdatensatzes und des Zwischendatensatzes mit einer frequenzabhängigen Gewichtung umgesetzt werden.

Für einen höchsten Frequenzbereich kann entweder ausschließlich ein gefilterter Zwischendatensatz und kein gefilterter Eingangsdatensatz ermittelt werden. Alternativ kann für den höchsten Frequenzbereich bei der Berechnung des Weiteren Zwischendatensatzes oder des Ausgangsdatensatzes der gefilterte Zwischendatensatz stärker gewichtet werden als der gefilterte Eingangsdatensatz. Somit wird erreicht, dass für den höchsten Frequenzbereich ausschließlich die Bilddaten des Zwischendatensatzes berücksichtigt werden bzw. dass die Bilddaten des Zwischendatensatzes zumindest stärker gewichtet werden als die Bilddaten des gewählten Eingangsdatensatzes. Dies ist vorteilhaft, da im höchsten Frequenzbereich der gewählte Eingangsdatensatz typischerweise stark durch Rauschen geprägt ist, womit in diesem Bereich eine besonders starke Rauschunterdrückung erfolgen soll, was durch die ausschließliche oder zumindest verstärkte Berücksichtigung der Bilddaten des Zwischendatensatzes erreicht werden kann.

Ergänzend oder alternativ zu den obigen Erläuterungen zum höchsten Frequenzbereich kann für einen niedrigsten Frequenzbereich entweder ausschließlich ein gefilterter Eingangsdatensatz und kein gefilterter Zwischendatensatz ermittelt werden oder bei der Berechnung des Weiteren Zwischendatensatzes oder des Ausgangsdatensatzes kann der gefilterte Eingangsdatensatz stärker gewichtet werden als der gefilterte Zwischendatensatz. Anders ausgedrückt können im niedrigsten Frequenzbereich ausschließlich oder zumindest verstärkt die Daten des gewählten Eingangsdatensatzes, also die unveränderten Originaldaten, verwendet werden. Dies ist vorteilhaft, da im niedrigsten Frequenzbereich typischerweise bereits im gewählten Eingangsdatensatz ein relativ geringes Rauschen auftritt und zudem dort auch wesentliche Merkmale abgebildet werden, wodurch mit Hilfe der erfindungsgemäßen frequenzabhängigen Gewichtung sichergestellt werden kann, dass diese Merkmale optimal wiedergegeben werden.

Die Summe oder gewichtete Summe des wenigstens einen gefilterten Eingangsdatensatzes und des wenigstens einen gefilterten Zwischendatensatzes kann insbesondere dann unmittelbar als Ausgangsdatensatz verwendet werden, wenn die Registrierung der weiteren Eingangsdatensätze zu dem gewählten Eingangsdatensatz sehr gut ist und somit keine oder nur vernachlässigbare Registrierungsfehler auftreten. Eine derart hohe Registrierqualität kann häufig nur dann erreicht werden, wenn Zusatzinformationen, also beispielsweise EKG-Signale zur Kompensation einer Herzbewegung, bereitstehen. Soll eine Registrierung ausschließlich auf Basis der Bilddaten selbst erfolgen, beispielsweise wenn nur DICOM-Bilder bereitstehen, resultieren häufig größere Registrierungsfehler, die dazu führen können, dass im ermittelten Ausgangsdatensatz bzw. im weiteren Zwischendatensatz Bildfehler aufgrund von Registrierungsartefakten auftreten.

Teile solcher Bildfehler können, wie später noch erläutert werden wird, bereits durch entsprechende Maßnahmen bei der Ermittlung des Zwischendatensatzes vermieden oder zumindest reduziert werden. Es kann jedoch dennoch erforderlich oder zumindest zweckmäßig sein, zunächst einen weiteren Zwischendatensatz zu ermitteln und diesen weiterzuverarbeiten, um den Einfluss von Artefakten aufgrund von Registrierungsfehlern zu reduzieren.

Insbesondere kann ein dritter Zwischendatensatz ermittelt werden, indem eine weitere Filterfunktion auf eine Differenz zwischen dem gewählten Eingangsdatensatz und dem weiteren Zwischendatensatz angewandt wird, wobei der Ausgangsdatensatz ermittelt wird, indem der dritte Zwischendatensatz, insbesondere nach einer Skalierung, von dem weiteren Zwischendatensatz oder von dem gewählten Eingangsdatensatz abgezogen wird.

Bei dem beschriebenen Vorgehen wird ausgenutzt, dass der Zwischendatensatz abgesehen von der Entrauschung und von Registrierungsartefakten im Wesentlichen dem gewählten Eingangsdatensatz entspricht. Die Differenz zwischen dem gewählten Eingangsdatensatz und dem weiteren Zwischendatensatz bildet somit im Wesentlichen Rauschen und aufgrund von Registrierungsfehlern resultierende Artefakte ab. Registrierungsartefakte führen hierbei primär zu Unschärfen bzw. Streifenbildung, während ein Rauschen eher körnige Strukturen verursacht. Hierdurch ist es durch Anwendung der weiteren Filterfunktion möglich, das Rauschen und die Artefaktabbildung zu separieren. Je nach gewähltem Filter kann somit erreicht werden, dass der dritte Zwischendatensatz nahezu ausschließlich Artefakte aufgrund von Registrierungsfehlern oder nahezu ausschließlich Rauschen abbildet.

Beispielsweise kann als weitere Filterfunktion ein Medianfilter genutzt werden, durch den der Rauschanteil in der Differenz zwischen den gewählten Eingangsdatensatz und dem weiteren Zwischendatensatz weitgehend eliminiert wird. Da der dritte Zwischendatensatz in diesem Fall im Wesentlichen Artefakte aufgrund von Registrierungsfehlern abbildet, kann durch Abziehen dieses dritten Zwischendatensatz von dem weiteren Zwischendatensatz der Beitrag der Artefakte aus dem weiteren Zwischendatensatz im Wesentlichen vollständig eliminiert werden. Um eine Überkompensation zu verhindern kann es vorteilhaft sein, den weiteren Zwischendatensatz vor dieser Subtraktion zu skalieren, insbesondere mit einem Faktor kleiner eins.

Wird alternativ eine weitere Filterfunktion genutzt, die dazu geeignet ist, Artefakte weitgehend aus der Differenz zwischen dem gewähltem Eingangsdatensatz und dem weiteren Zwischendatensatz zu entfernen, so verbleibt im dritten Zwischendatensatz letztlich nur der Rauschanteil des gewählten Eingangsdatensatzes, der anschließend von dem gewählten Eingangsdatensatz abgezogen werden kann, um das Rauschen zu eliminieren. Auch hier kann es vorteilhaft sein, den dritten Zwischendatensatz vor dieser Subtraktion zu skalieren, um eine Überkompensation des Rauschens zu vermeiden.

Die weiteren Eingangsdatensätze können durch einen Algorithmus zu dem gewählten Eingangsdatensatz registriert werden oder sein, der eine elastische Registrierung durchführt und/oder der durch ein Verfahren des Maschinenlernens trainiert ist. Durch eine elastische Registrierung können insbesondere Verzerrungen innerhalb des Bildes, wie sie beispielsweise bei einem Herzschlag oder einer Atmung auftreten, eliminiert werden. Verschiedene Ansätze zur elastischen Registrierung von medizinischen Bilddaten sind im Stand der Technik bekannt und sollen nicht detailliert erläutert werden. Rein beispielhaft wird auf den eingangs zitierten Artikel von M. Brehm. et al. verwiesen, in dem eine elastische Registrierung verwendet wird.

Wird der Algorithmus durch ein Verfahren des Maschinenlernens trainiert, kann er beispielsweise ein neuronales Netz, eine Supportvektormaschine, ein Entscheidungsbaum und/oder ein Bayes'sches Netz sein oder umfassen. Alternativ oder ergänzend kann der trainierte Algorithmus auch auf einem k-Means-Algorithmus, auf Q-Learning, einem genetischen Algorithmus und/oder auf Assoziationsregeln basieren. Ein neuronales Netz kann insbesondere ein Deep-Neural-Network, ein Convolutional-Neural-Network oder ein Convolutional-Deep-Neural-Network sein. Bei dem neuronalen Netz kann es sich ergänzend oder alternativ um ein Adversarial-Network, ein Deep-Adversarial-Network und/oder ein Generitive-Adversarial-Network handeln.

Möglichkeiten zum Training des Algorithmus werden im Folgenden beispielhaft für ein überwachtes Lernen erläutert. Alternativ wäre auch ein teilüberwachtes Lernen, ein bestärkendes Lernen, ein aktives Lernen und/oder ein unüberwachtes Lernen möglich.

Eine wesentliche Herausforderung beim Training eines Algorithmus durch ein überwachtes Maschinenlernen ist es typischerweise, ausreichend große Mengen von Trainingsdaten bereitzustellen. Diese Problematik kann für Algorithmen zum Trainieren von Algorithmen zum Registrieren von Eingangsdaten zumindest teilweise dadurch gelöst werden, dass Referenzdatensätze künstlich modifiziert werden, also künstlich eine anfänglich vorhandene Registrierung zerstört wird, wonach der Algorithmus darauf trainiert werden kann, die zur Veränderung des Datensatzes genutzten Parameter zu erkennen und somit die Registrierung wiederherzustellen. Beispielsweise kann ein Referenzdatensatz zufällig oder beispielsweise unter Berücksichtigung einer bekannten Segmentierung rotiert, verschoben, skaliert und/oder lokal verzerrt werden. Die Kostenfunktion kann beispielswiese versuchen die Abweichung zwischen der ermittelten Registrierung und der tatsächlichen Registrierung bzw. Veränderung für eine große Menge von Trainingsdaten zu minimieren. Beispielsweise kann hierfür der an sich bekannte Ansatz der Fehlerrückführung verwendet werden.

Das Training des Algorithmus kann zwar prinzipiell Teil des erfindungsgemäßen Verfahrens sein. Besonders bevorzugt wird in dem erfindungsgemäßen Verfahren jedoch ein bereits vor Beginn des erfindungsgemäßen Verfahrens trainierter Algorithmus verwendet. Der Algorithmus kann somit in einem separaten Verfahren trainiert werden. Somit betrifft die Erfindung auch ein Verfahren zum Trainieren eines Algorithmus zur Registrierung der weiteren Eingangsdatensätze zu dem gewählten Eingangsdatensatz. Zudem betrifft die Erfindung eine Trainingsvorrichtung, die zur Durchführung dieses Verfahrens eingerichtet ist, ein Programm, das bei Ausführung auf einer Datenverarbeitungseinrichtung die Schritte dieses Verfahrens durchführt und einen computerlesbaren Datenträger, der ein solches Programm speichert. Daneben betrifft die Erfindung einen trainierten Algorithmus zum Registrieren von weiteren Eingangsdatensätzen zu einem gewählten Eingangsdatensatz bzw. Parameterdatensätze, die einen vorgegebenen Algorithmus zur Bereitstellung dieses Algorithmus parametrisieren bzw. einen computerlesbaren Datenträger, der den Algorithmus bzw. seine Parameter speichert. Der Algorithmus bzw. seine Parameter und somit auch der Datenträger können insbesondere als Erzeugnis des erläuterten Trainingsverfahrens bereitgestellt werden.

Die Bilddaten eines jeweiligen Bildpunktes oder Voxels des Zwischendatensatzes können in Abhängigkeit der Summe oder der gewichteten Summe der Bilddaten des jeweiligen zugeordneten Bildpunktes oder Voxels des gewählten Eingangsdatensatzes und des weiteren Eingangsdatensatzes oder wenigstens eines der weiteren Eingangsdatensätze ermittelt werden. Insbesondere sind Bildpunkte an der gleichen Position in dem jeweiligen Datensatz einander zugeordnet. Beispielsweise kann eine Summe bzw. gewichtete Summe der Punkte an der gleichen x- und y-Position und, bei dreidimensionalen Datensätzen, der z-Position gebildet werden.

Die Gewichtung der Summanden dient insbesondere dazu, vorzugeben, inwieweit Bildpunkte eines jeweiligen weiteren Eingangsdatensatzes berücksichtigt werden. Hierbei kann die Gewichtung für alle Bildpunkte bzw. Voxel des jeweiligen weiteren Eingangsdatensatzes gleich sein, beispielsweise, wenn die Gewichtung von einem zeitlichen Abstand der Erfassung des gewählten Eingangsdatensatzes und des jeweiligen weiteren Eingangsdatensatzes abhängt. Dies kann beispielsweise zweckmäßig sein, wenn nicht periodische Bewegungen eines Untersuchungsobjekts zu erwarten sind bzw. die Gewichtung kann mit der zu erwartenden periodischen Bewegung oszillieren.

Besonders bevorzugt kann die Gewichtung der Summanden ergänzend oder alternativ dazu dienen, Kanten im Bild zu erhalten. So können beispielsweise bereits geringfügige Registrierungsfehler zwischen den einzelnen Datensätzen dazu führen, dass in zumindest Teilen der weiteren Eingangsdatensätze ein Bildpunkt oder Voxel eine andere Seite einer Kante abbildet als der zugeordnete Bildpunkt bzw. Voxel in dem gewählten Eingangsdatensatz. Dies kann z.B. bei einer Mittelung der Bilddaten der Bildpunkte zu einer Verschmierung dieser Kante führen.

Kanten können weitgehend erhalten werden, wenn ein Kontrastunterschied zwischen den Bildpunkten berücksichtigt wird. Beispielsweise können bestimmte Bildpunkte bzw. Voxel der weiteren Eingangsdatensätze nicht berücksichtigt werden, wenn die Bilddaten an diesem Punkt bzw. Voxel zu stark von den Bilddaten des zugeordneten Bildpunkts bzw. Voxels des gewählten Eingangsdatensatzes abweichen, beispielsweise wenn ein Maß für die Abweichung einen Grenzwert überschreitet.

Alternativ wäre es beispielsweise möglich, dass die Gewichtung der Bilddaten eines jeweiligen Bildpunktes bzw. Voxels des jeweiligen weiteren Eingangsdatensatzes von dem Maß für den Unterschied zwischen diesen Bilddaten und den Bilddaten des zugeordneten Bildpunktes bzw. Voxels des gewählten Eingangsdatensatzes abhängt. Werden Gewichtungsfaktoren durch mehrere Faktoren beeinflusst, also beispielsweise durch einen Kontrastunterschied und einen zeitlichen/oder räumlichen Abstand, wird diese aufgrund der Kontrastabhängigkeit nicht linearer Filterung auch als bilaterale Filterung bezeichnet. Weitere Details zu einer solchen bilateralen Filterung können beispielsweise dem bereits eingangs zitierten Artikel von C. Tomasi entnommen werden.

Ein Bildpunkt bzw. Voxel des Zwischendatensatzes kann auch von Bilddaten von Bildpunkten bzw. Voxeln des gewählten Eingangsdatensatzes bzw. wenigstens eines der weiteren Eingangsdatensätze abhängen, die an einer anderen Position, insbesondere direkt bzw. indirekt benachbart, angeordnet sind. Neben der erläuterten Summe bzw. gewichteten Summe über Bilddaten von Bildpunkten bzw. Voxeln an der gleichen Position, die als Filterung über mehrere Zeitpunkte bzw. Phasen aufgefasst werden kann, kann somit auch eine Filterung im Ortsraum erfolgen. Dies kann insbesondere vorteilhaft sein, wenn wie obig erläutert ein kantenerhaltender bzw. ein Kontrastunterschiede berücksichtigender Ansatz genutzt wird, da hierdurch im Rahmen der Ermittlung des Zwischendatensatzes bereits kleinere Registrierungsfehler ausgeglichen werden können.

Wird eine ungewichtete Summe der Bilddaten der verschiedenen Eingangsdatensätze verwendet und anschließend durch die Zahl der Eingangsdatensätze geteilt, entspricht dies einer Mittelung. Im einfachsten Fall wird der Zwischendatensatz somit dadurch berechnet, dass der gewählte Eingangsdatensatz und wenigstens einer der weiteren Eingangsdatensätze gemittelt werden.

Die Berücksichtigung der Bilddaten oder der Gewichtungsfaktoren für die Bilddaten des jeweiligen zugeordneten Bildpunktes oder Voxels des jeweiligen weiteren Eingangsdatensatzes kann von einem Maß für einen Unterschied zwischen den Bilddaten dieses Bildpunktes oder Voxels und den Bilddaten des zugeordneten Bildpunktes oder Voxels des gewählten Eingangsdatensatzes abhängig sein. Insbesondere kann die Gewichtung von Voxeln eines weiteren Eingangsdatensatzes mit zunehmendem Unterschied der Bilddaten abnehmen. Es ist auch möglich, dass Bilddaten von weiteren Eingangsdatensätzen, für die das Maß für den Unterschied einen Grenzwert überschreitet, nicht berücksichtigt werden. Wie bereits obig erläutert, kann durch das erläuterte Vorgehen insbesondere erreicht werden, dass Kanten in dem gewählten Eingangsdatensatz durch die Filterung über mehrere Eingangsdatensätze hinweg nicht verwischt werden.

In einer vorteilhaften Ausgestaltung des Verfahrens wird der Zwischendatensatz durch einen Algorithmus ermittelt, der durch ein Verfahren des Maschinenlernens trainiert ist. Wie bereits obig zum Algorithmus zur Registrierung der weiteren Eingangsdatensätze zu dem gewählten Eingangsdatensatz erläutert wurde, kann das Training des Algorithmus vorzugsweise in einem vorbereitenden Schritt vor Durchführung des erfindungsgemäßen Verfahrens erfolgen. Somit kann der bereits trainierte Algorithmus bereitgestellt werden, um die Durchführung des erfindungsgemäßen Verfahrens unter Verwendung dieses Algorithmus zu ermöglichen. Die allgemeinen Ausführungen zum Training von Algorithmen durch Maschinenlernen bezüglich des Algorithmus zur Registrierung können auch auf den Algorithmus zur Ermittlung des Zwischendatensatzes übertragen werden.

Der Einfachheit halber soll auch das Training des Algorithmus zur Ermittlung des Zwischendatensatzes am Beispiel eines überwachten Lernens erläutert werden. Trainingsdatensätze für ein solches überwachtes Lernen können beispielsweise synthetisch erzeugt werden, indem zu mehreren Sätzen von Referenzdaten jeweils synthetisches Rauschen addiert wird, wobei der Algorithmus zur Entfernung dieses Rauschens trainiert werden soll. Datensätze, die von dem gleichen Referenzdatensatz ausgehen, sind hierbei perfekt registriert. Sie können daher im Rahmen des Trainings als gewählter Eingangsdatensatz und weitere Eingangsdatensätze verwendet werden.

Alternativ wäre es beispielsweise möglich, einige dieser Datensätze zu verschieben, zu rotieren, zu skalieren und/oder zu verzerren, um auch das Verhalten des Algorithmus zur Erzeugung des Zwischendatensatzes bezüglich Registrierungsfehlern zu trainieren. Eine Kostenfunktion kann beispielsweise den Unterschied zwischen dem erzeugten Zwischendatensatz und den Referenzdaten vor Hinzufügen des Rauschens minimieren.

Bei dem Algorithmus zur Erzeugung des Zwischendatensatzes kann es sich letztlich um ein Filterkernel handeln, das gemeinsam auf den gewählten Eingangsdatensatz und die weiteren Eingangsdatensätze angewandt wird, wobei beispielsweise die Aufnahmereihenfolge der Eingangsdatensätze als zusätzliche Dimension dient. Derartige Probleme lassen sich beispielsweise gut durch ein Convolutional-Neural-Network als Struktur des zu trainierenden Algorithmus abbilden.

Wie bereits erläutert, kann das Training des Algorithmus zur Bestimmung des Zwischendatensatzes in einem separaten Verfahren erfolgen. Die Erfindung betrifft daher auch ein Verfahren zum Trainieren eines Algorithmus zum Ermitteln eines Zwischendatensatzes, eine Trainingsvorrichtung, die zur Durchführung dieses Verfahrens eingerichtet ist, ein Computerprogramm, das bei Ausführung auf einer Datenverarbeitungseinrichtung die Schritte dieses Verfahrens durchführt und einen computerlesbaren Datenträger, der ein solches Programm speichert.

Ergänzend betrifft die Erfindung auch einen trainierten Algorithmus zur Bereitstellung des Zwischendatensatzes bzw. einen Parameterdatensatz, der einen vorgegebenen Algorithmus zur Bereitstellung dieses Algorithmus parametrisiert bzw. einen computerlesbaren Datenträger, der diesen Algorithmus oder Parameterdatensatz speichert. Der Algorithmus bzw. der Parameterdatensatz bzw. der Datenträger können insbesondere als Erzeugnis des erläuterten Trainingsverfahrens bereitgestellt werden.

Wenigstens eine der Filterfunktionen kann jeweils sowohl auf den gewählten Eingangsdatensatz als auch auf den Zwischendatensatz angewandt werden, wobei sich die Gewichtungsfaktoren, mit denen der aus der Anwendung der jeweiligen Filterfunktion resultierende gefilterte Eingangsdatensatz und gefilterte Zwischendatensatz bei der Berechnung des Weiteren Zwischendatensatzes oder des Ausgangsdatensatzes gewichtet werden, zu eins addieren. Dies kann insbesondere für alle Filterfunktionen gelten. Insbesondere kann aus der Anwendung einer jeweiligen Filterfunktion, wie obig erläutert, zumindest näherungsweise eine Einschränkung der Raumfrequenzen im resultierenden gefilterten Eingangsdatensatz bzw. gefilterten Zwischendatensatz auf den zugeordneten Frequenzbereich resultieren. Somit legen die Gewichtungsfaktoren, die sich zu eins addieren, für diesen Frequenzbereich die Gewichtung zwischen dem gewählten Eingangsdatensatz und dem Zwischendatensatz fest.

Auf den gewählten Eingangsdatensatz können mehrere Filterfunktionen angewandt werden, die derart gewählt sind, dass die Summe der gefilterten Eingangsdatensätze dem gewählten Eingangsdatensatz entspricht. Ergänzend oder alternativ können auf den Zwischendatensatz mehrere Filterfunktionen angewandt werden, die derart gewählt sind, dass die Summe der gefilterten Zwischendatensätze dem Zwischendatensatz entspricht. Anders ausgedrückt können die Filterfunktionen so gewählt sein, dass sie den gewählten Eingangsdatensatz bzw. den Zwischendatensatz in verschiedene Bildbestandteile, insbesondere in Frequenzbänder, zerlegen, wobei sich die verschiedenen Bestandteile wieder zum Ursprungsbild addieren. Hierbei können geringfügige Abweichungen auftreten, beispielsweise aufgrund der Genauigkeit des im Rahmen der Berechnung genutzten Zahlenformats, aufgrund von Näherungen beiden Filtervorgängen, beispielsweise kurzen Längen von Filterkerneln, die zu Oszillationen außerhalb des Passbandes führen können, oder Ähnliches. Anders ausgedrückt kann die Summe der gefilterten Eingangsdatensätze nur näherungsweise gleich zum gewählten Eingangsdatensatz sein bzw. die Summe der gefilterten Zwischendatensätze kann nur näherungsweise gleich zum Zwischendatensatz sein.

Der gewählte Eingangsdatensatz und der wenigstens eine weitere Eingangsdatensatz können zu unterschiedlichen Zeitpunkten der gleichen Untersuchung oder Behandlung des Untersuchungsobjekts, nämlich in unterschiedlichen Bewegungsphasen eines Organs des Untersuchungsobjekts, und/oder mit gleicher Aufnahmegeometrie aufgenommen sein oder werden. Unter einer gleichen Behandlung bzw. Untersuchung sind hierbei insbesondere Vorgänge zu verstehen, zwischen denen der Patient nicht gezielt umgelagert wird. Die Registrierung der weiteren Eingangsdatensätze zu dem gewählten Eingangsdatensatz kann somit insbesondere dazu dienen, ungewollte Bewegungen eines Untersuchungsobjekts bzw. zumindest näherungsweise periodische Bewegungen, beispielsweise eine Atmung oder einen Herzschlag, zu kompensieren.

Der gewählte Eingangsdatensatz und der weitere Eingangsdatensatz bzw. die weiteren Eingangsdatensätze können insbesondere verschiedene Bilder einer Multikontrastbildgebung sein, verschiedenen Herz- und/oder Atmungsphasen zugeordnet sein und/oder sich bezüglich wenigstens einem Erfassungsparameter, beispielsweise bezüglich des Röntgenspektrums, insbesondere im Fall einer Zwei- oder Mehrenergiecomputertomographie, unterscheiden. Es ist auch möglich, dass in den verschiedenen Eingangsdatensätzen unterschiedliche Kontrastmittelkonzentrationen im Untersuchungsobjekt vorliegen oder Ähnliches. Prinzipiell können auch Eingangsdatensätze genutzt werden, die sich nur aufgrund von ungewollten Untersuchungsobjektbewegungen unterscheiden.

Neben dem erfindungsgemäßen computerimplementierten Verfahren betrifft die Erfindung eine Bereitstellungseinrichtung, die zur Durchführung des erfindungsgemäßen computerimplementierten Verfahrens eingerichtet ist. Insbesondere kann die Bereitstellungseinrichtung eine Eingangsschnittstelle zum Empfang des gewählten Eingangsdatensatzes und des wenigstens einen weiteren Eingangsdatensatzes sowie eine Ausgangsschnittstelle zur Ausgabe des Ausgangsdatensatzes umfassen. Sie kann als Datenverarbeitungseinrichtung ausgebildet sein, die zur Durchführung der zum Verfahren erläuterten Datenverarbeitung eingerichtet ist. Die Datenverarbeitung kann beispielsweise durch einen entsprechend programmierten Prozessor, beispielsweise einen Mikroprozessor, Mikrocontroller, FPGA, DSP oder Ähnliches, oder auch verteilt durch eine Vielzahl von Prozessoren, beispielsweise durch eine Cloud, erfolgen.

Die zu dem erfindungsgemäßen computerimplementierten Verfahren erläuterten Merkmale können mit den genannten Vorteilen auf die erfindungsgemäße Bereitstellungseinrichtung übertragen werden und umgekehrt.

Zudem betrifft die Erfindung eine medizinische Bildgebungseinrichtung, insbesondere eine Computertomographieeinrichtung, die eine erfindungsgemäße Bereitstellungseinrichtung umfasst. Hierdurch wird insbesondere ermöglicht, dass der gewählte und der wenigstens eine weitere Eingangsdatensatz unmittelbar bei ihrer Erfassung bzw. im Anschluss hierzu, also beispielsweise bereits bei einer ersten Visualisierung für eine Bedienperson, durch das erfindungsgemäße computerimplementierte Verfahren aufgearbeitet werden können. Alternativ zur Integration in die medizinische Bildgebungseinrichtung kann die Bereitstellungseinrichtung jedoch auch eine separate Einrichtung sein, die beispielsweise über ein Netzwerk oder eine Datenbank Eingangsdaten erhält und/oder Ausgangsdaten ausgibt.

Die Erfindung betrifft zudem ein Computerprogramm für eine Datenverarbeitungseinrichtung mit Programmanweisungen, die bei einer Durchführung auf einer Datenverarbeitungseinrichtung ein erfindungsgemäßes computerimplementiertes Verfahren durchführen.

Zudem betrifft die Erfindung einen computerlesbaren Datenträger, der ein erfindungsgemäßes Computerprogramm umfasst.

Bei einem Vergleich von Bildrauschen bei Mehrphasen-Bildern mit einem Bildrauschen bei Standardaufnahmen (eine Phase), bei ansonsten konstanten Aufnahmeparametern, insbesondere bei konstanter Dosis (in den Einzelphasen), z.B. in Phantomscans, kann bei Verwendung des beschriebenen Algorithmus bei den Mehrphasen Bildern ein gegenüber der Standardaufnahme reduziertes Rauschen erreicht werden.

Wird die Rauschreduktion bei weichen und scharfen Eingangsbildern bei Verwendung der beschriebenen Methode verglichen, kann wegen der Frequenzabhängigkeit der Phasenmittelung bzw. der Bildung der gewichteten Summe eine Nichtlinearität auftreten.

Die Verwendung von registrierten Eingangsdatensätzen bzw. einer Registrierung kann dazu führen, dass bei einem Vergleich der Rauschreduktion zwischen einer Verwendung von gleichen Eingangsdatensätzen und deutlich voneinander unterschiedlichen Eingangsdatensätzen geringere Unterschiede auftreten als dies ohne diese Registrierung der Fall wäre.

Weitere Vorteile und Einzelheiten der Erfindung ergeben sich aus den folgenden Ausführungsbeispielen sowie den zugehörigen Zeichnungen. Hierbei zeigen schematisch:

Fig. 1    ein Ablaufdiagramm eines Ausführungsbeispiels eines erfindungsgemäßen computerimplementierten Verfahrens,

Fig. 2    die im Rahmen des in Fig. 1 gezeigten Verfahrens genutzten Algorithmen und Datenstrukturen,

Fig. 3    das Zusammenwirken eines Ausführungsbeispiels einer erfindungsgemäßen Bereitstellungseinrichtung mit einer medizinischen Bildgebungseinrichtung,

Fig. 4+5    beispielhafte Trainingsvorgänge zum Trainieren von in dem erfindungsgemäßen computerimplementierten Verfahren nutzbaren Algorithmen durch Verfahren des Maschinenlernens, und

Fig. 6+7    beispielhafte Strukturen von trainierten Algorithmen, die in dem erfindungsgemäßen Verfahren nutzbar sind.

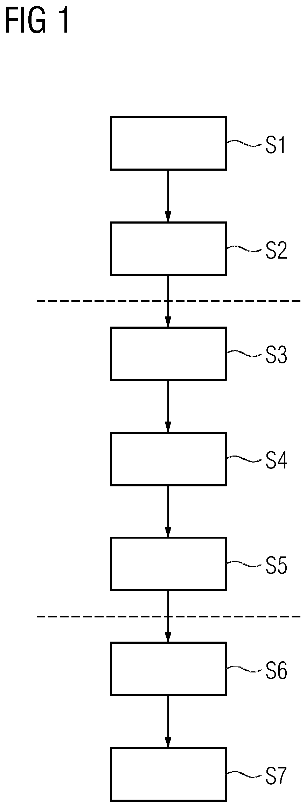

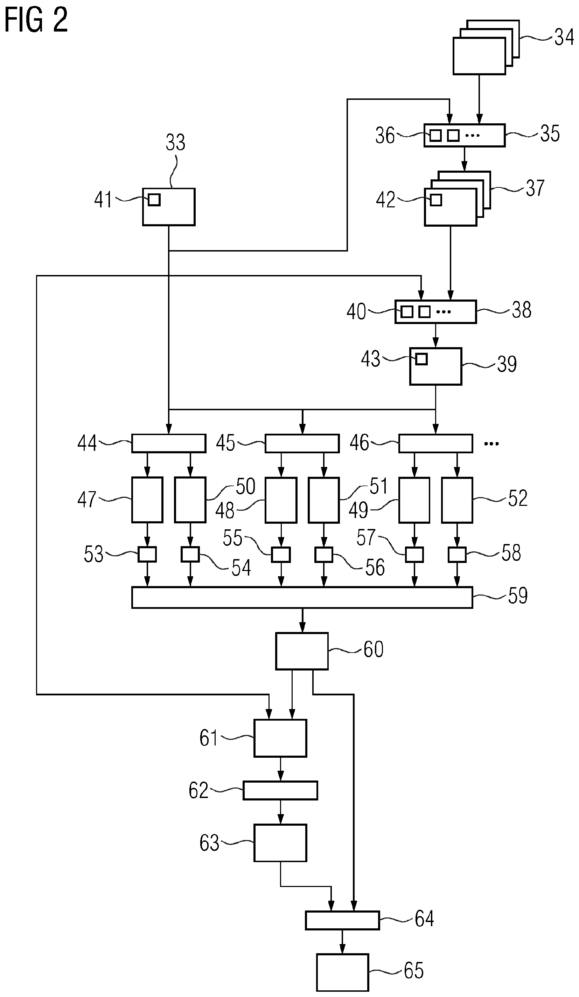

Fig. 1 zeigt ein Ablaufdiagramm eines computerimplementierten Verfahrens zur Bereitstellung eines Ausgangsdatensatzes mit einer gegenüber einem gewählten Eingangsdatensatz verbesserten Bildqualität. Das Verfahren wird im Folgenden mit zusätzlichem Bezug auf Fig. 2 erläutert, die die im Rahmen des Verfahrens genutzten Algorithmen und Datenstrukturen schematisch darstellt. Hierbei werden die Datensätze der übersichtlichen Darstellung halber zweidimensional dargestellt, wobei das erläuterte Verfahren sowohl mit zweidimensionalen als auch mit dreidimensionalen Datensätzen verwendet werden kann. Wie in Fig. 1 durch gestrichelte Linien dargestellt ist, kann das im Folgenden erläuterte Verfahren in drei Abschnitte geteilt werden. Die Schritte S1 und S2 können als vorbereitende Schritte durchgeführt werden oder optional auch Teil des Verfahrens sein. Die Schritte S3 bis S5 stellen den Kern des erläuterten Verfahrens dar und die Schritte S6 und S7 können optional zusätzlich durchgeführt werden, um einen Einfluss von Registrierungsfehlern auf den ermittelten Ausgangsdatensatz zu minimieren.

In Schritt S1 werden zunächst ein gewählter Eingangsdatensatz 33 sowie eine Vielzahl weiterer Eingangsdatensätze 34 erfasst. Die Eingangsdatensätze 33, 34 können beispielsweise rekonstruierte dreidimensionale Datensätze sein, deren Ausgangsdaten durch einen Computertomographen erfasst wurden. Es können jedoch auch beliebige zweidimensionale oder dreidimensionale andere Bilddaten verarbeitet werden. Hierbei sind der gewählte Eingangsdatensatz 33 und die weiteren Eingangsdatensätze 34 zu unterschiedlichen Zeiten während einer Untersuchung am gleichen Untersuchungsobjekt erfasst worden, so dass aufgrund von unbeabsichtigten Bewegungen des Untersuchungsobjekts oder nicht vermeidbaren Bewegungen, wie beispielsweise einem Herzschlag oder einer Atmung, die verschiedenen Eingangsdatensätze 33, 34 zunächst noch nicht registriert sind. Zudem können sich die verschiedenen Eingangsdatensätze 33, 34 bezüglich einer Kontrastmittelkonzentration im Untersuchungsobjekt, bezüglich genutzter Bildgebungsparameter und/oder bezüglich anderer Faktoren unterscheiden. Die verschiedenen Aufnahmen zu unterschiedlichen Zeitpunkten bzw. unter unterschiedlichen Bedingungen können auch als Phasen einer Mehrphasenbildgebung bezeichnet werden.

In dem weiteren vorbereiteten Schritt S2 wird durch einen Algorithmus 35 eine Registrierung der weiteren Eingangsdatensätze 34 zu dem gewählten Eingangsdatensatz 33 durchgeführt. Das beschriebene Vorgehen zur Verbesserung des gewählten Eingangsdatensatzes 33 kann selbstverständlich auch für mehrere der Eingangsdatensätze 33, 34 wiederholt werden, um auch die Bildqualität der weiteren Eingangsdatensätze 34 zu verbessern.

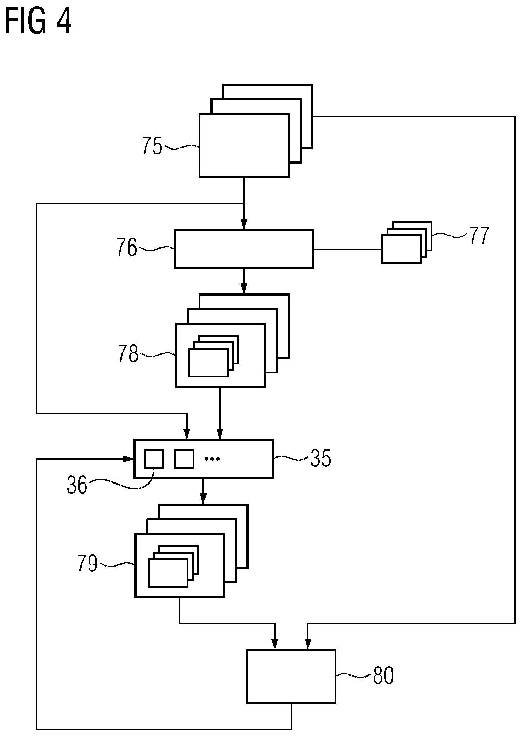

Der Algorithmus 35 kann durch ein Verfahren des Maschinenlernens trainiert sein. Ein Beispiel für ein mögliches Training wird später noch mit Bezug auf Fig. 4 erläutert werden. Hierbei können insbesondere eine Vielzahl von Parametern 36 des Algorithmus 35 im Rahmen des Trainings bestimmt werden. Alternativ können prinzipiell im Stand der Technik bekannte Ansätze zur insbesondere elastischen Registrierung von Bilddatensätzen genutzt werden, die hier nicht detailliert erläutert werden sollen.

In den resultierenden registrierten weiteren Eingangsdatensätzen 37 gilt, dass Punkte bzw. Voxel 41, 42 an der gleichen Position in dem gewählten Eingangsdatensatz 33 und den registrierten weiteren Eingangsdatensätzen 37 im Wesentlichen den gleichen Bereich des Untersuchungsobjekts abbilden.

In Schritt S3 wird durch einen Algorithmus 38, dem als Eingangsdaten der gewählte Eingangsdatensatz 33 und die registrierten weiteren Eingangsdatensätze 37 zugeführt werden, ein Zwischendatensatz 39 ermittelt. Hierbei wird für einen jeweiligen Bildpunkt oder Voxel 43 des Zwischendatensatzes, dessen Position im Fall von dreidimensionalen Eingangsdatensätzen durch das Koordinatentupel x, y, z angegeben wird, ein Wert der Bilddaten Z des Zwischendatensatzes als Funktion der Bilddaten der Bildpunkte bzw. Voxel 41, 42 an der jeweiligen gleichen Koordinate x, y, z des gewählten Eingangsdatensatzes $E^g$ bzw. 33 und der N verschiedene verschiedenen weiteren Eingangsdatensätze $E^{w1}$ bis $E^{wN}$ ermittelt:

$$(1) \quad Z_{x,y,z} = g(E^g_{x,y,z},\ E^{w1}_{x,y,z},\ ...,\ E^{wN}_{x,y,z})$$

Die Funktion g ist insbesondere eine gewichtete Summe der genannten Werte. Im einfachsten Fall kann der Mittelwert dieser Werte, also der Mittelwert die Punkte bzw. Voxel 41, 42 berechnet werden, um die Bilddaten des Bildpunktes bzw. Voxels 43 zu ermitteln.

Die Gewichte für die Bilddaten des Bildpunkts bzw. Voxels 42 der weiteren Eingangsdatensätze 37 können insbesondere von einem Maß für den Unterschied zwischen den Bilddaten des jeweiligen Bildpunkts bzw. Voxels 42 und den Bilddaten des zugeordneten Bildpunkts bzw. Voxels 41 des gewählten Eingangsdatensatzes 33 abhängen. Somit implementiert der Algorithmus 38 insbesondere einen nicht linearen, insbesondere bilateralen, Filter. Zusätzlich zu den genannten Größen kann die Funktion g noch von Bilddaten von Bildpunkten bzw. Voxeln abhängen, die zu dem Bildpunkt bzw. Voxel 41, 42 benachbart sind. Somit kann zusätzlich eine räumliche Filterung erfolgen.

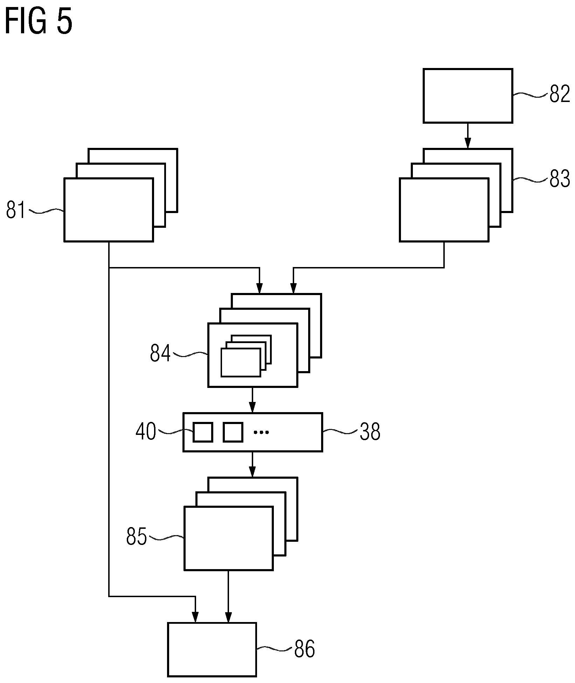

Der Algorithmus 38 kann beispielsweise durch Wahl eines entsprechenden Filterkernels vorgegeben werden. Es kann jedoch vorteilhaft sein, den Algorithmus 38 durch ein Verfahren des Maschinenlernens zu trainieren, wie später noch mit Bezug auf Fig. 5 erläutert werden wird. Hierbei kann insbesondere ausgenutzt werden, dass Filterfunktionen sehr gut durch ein Convolutional-Neural-Network implementiert werden können.

In Schritt S4 werden die Filterfunktionen 44, 45, 46 jeweils sowohl auf den gewählten Eingangsdatensatz 33 angewendet, um einen jeweiligen gefilterten Eingangsdatensatz 47, 48, 49 zu generieren, als auch auf den Zwischendatensatz 39 angewandt, um einen jeweiligen gefilterten Zwischendatensatz 50, 51, 52 zu generieren. Die Filterfunktionen 44 bis 46, von denen rein beispielhaft nur drei dargestellt sind, sind insbesondere jeweils einem Frequenzbereich zugeordnet und unterdrücken Raumfrequenzen außerhalb des zugeordneten Frequenzbereichs in den jeweiligen gefilterten Eingangs- bzw. Zwischendatensätzen 47 bis 52 im Wesentlichen vollständig.

Beispielsweise kann eine Filterung im Fourierraum erfolgen oder es kann eine Fensterfunktion im Fourierraum und in den Realraum transformiert werden, um ein Faltungskernel bereitzustellen. Die Filterfunktionen sind hierbei derart gewählt, dass die Summe der gefilterten Eingangsdatensätze 47 bis 49 dem gewählten Eingangsdatensatz 33 entspricht und die Summe der gefilterten Zwischendatensätze 50 bis 52 dem Zwischendatensatz 39. Anders ausgedrückt werden sowohl der gewählte Eingangsdatensatz 33 als auch der Zwischendatensatz 39 durch die Filterfunktionen 44 bis 46 in verschiedene Frequenzkomponente zerlegt.

In Schritt S5 wird ein weiterer Zwischendatensatz 60 ermittelt, indem die gefilterten Eingangsdatensätze 47 bis 49 und die gefilterten Zwischendatensätze 50 bis 52 mit Gewichtungsfaktoren 53 bis 58 gewichtet und dadurch ein Addierer 59 summiert werden.

Durch das beschriebene Vorgehen wird erreicht, dass der gewählte Eingangsdatensatz 33 und der Zwischendatensatz 39 frequenzabhängig gewichtet werden, um den weiteren Zwischendatensatz 60 zu erzeugen. Im Zwischendatensatz 39 ist ein Bildrauschen durch Berücksichtigung der weiteren Eingangsdatensätze 37 weitgehend unterdrückt. In Frequenzbereichen, in denen der Zwischendatensatz 39 stark gewichtet wird, kann somit eine starke Rauschunterdrückung erfolgen. Dies ist insbesondere für hohe Frequenzen sehr relevant.

Zugleich wird durch eine stärkere oder ausschließliche Berücksichtigung des gewählten Eingangsdatensatzes 33 in bestimmten Frequenzbereichen, beispielsweise für niedrige Frequenzen, erreicht, dass durch diese Frequenzbereiche geprägte Merkmale nicht durch die Bearbeitung zur Rauschunterdrückung überdeckt oder abgeschwächt werden können. Insgesamt kann somit eine sehr gute Rauschunterdrückung erreicht werden, ohne dass relevante Merkmale verschmiert oder überdeckt werden.

Die Gewichtungsfaktoren 53 bis 58 werden vorzugsweise so gewählt, dass sich für einen jeweiligen Frequenzbereich bzw. Filter der jeweilige Gewichtungsfaktor 53, 55, 57 für den gefilterten Eingangsdatensatz 47, 48, 49 und der jeweilige Gewichtungsfaktor 54, 56, 58 für den gefilterten Zwischendatensatz 50, 51, 52 zu eins addieren. Somit kann die Berechnung des Weiteren Zwischendatensatzes Z' bzw. 60 wie folgt ausgedrückt werden:

$$(2) \quad Z' = \begin{pmatrix} w_1 \\ \vdots \\ w_N \end{pmatrix} \cdot \begin{pmatrix} F_1(E^g) \\ \vdots \\ F_N(E^g) \end{pmatrix} + \begin{pmatrix} 1 - w_1 \\ \vdots \\ 1 - w_N \end{pmatrix} \cdot \begin{pmatrix} F_1(Z) \\ \vdots \\ F_N(Z) \end{pmatrix}$$

Hier sind $F_1$ bis $F_N$ die Filterfunktionen 44, 45, 46, die einerseits auf den gewählten Eingangsdatensatz $E^g$ bzw. 33 und andererseits auf den Zwischendatensatz Z bzw. 39 angewandt werden. Für die den einzelnen Filterfunktionen $F_1$ bis $F_N$ zugeordneten Frequenzbänder wird jeweils ein Gewichtungsfaktor $w_1$ bis $w_N$ vorgegeben, der angibt, wie stark in dem jeweiligen Frequenzband der gewählte Eingangsdatensatz $E^g$ verglichen mit dem Zwischendatensatz Z gewichtet werden soll.

Wird davon ausgegangen, dass die Registrierung der registrierten weiteren Eingangsdatensätze 37 zu dem gewählten Eingangsdatensatz 33 im Wesentlichen fehlerfrei ist bzw. nur zu vernachlässigbaren Artefakten führt, kann der weitere Zwischendatensatz 60 unmittelbar als Ausgangsdatensatz 65 verwendet werden. Erfolgt jedoch wie im gezeigten Beispiel eine Registrierung ausschließlich anhand der Bilddaten der Eingangsdatensätze 33, 34, so ist dies typischerweise nicht gewährleistet, so dass es zweckmäßig sein kann, die optionale Weiterverarbeitung des Weiteren Zwischendatensatzes 60 in den Schritten S6 und S7 durchzuführen, wie im Folgenden erläutert wird.

In Schritt S6 wird zunächst eine Differenz 61 zwischen dem weiteren Zwischendatensatz 60 und dem gewählten Eingangsdatensatz 33 berechnet. Da der weitere Zwischendatensatz 60 dem gewählten Eingangsdatensatz 33 abgesehen von dem Rauschen und Artefakten aufgrund einer fehlerhaften Registrierung zumindest näherungsweise entspricht, bildet die Differenz 61 näherungsweise eine Summe aus dem Rauschanteil des gewählten Eingangsdatensatzes 33 und den im Rahmen der Verarbeitung verursachten Artefakten.

Durch Anwenden einer weiteren Filterfunktion 62, beispielsweise eines Medianfilters, der den Rauschanteil aus der Differenz 61 zumindest weitgehend filtert, wird ein dritter Zwischendatensatz 63 generiert, der somit weitgehend die im Rahmen der Verarbeitung generierten Artefakte abbildet.

Dieser kann in Schritt S7 von dem weiteren Zwischendatensatz 60 durch den Subtrahierer 64 abgezogen werden, um den Ausgangsdatensatz 65 zu ermitteln. Um ein Überkompensieren der Artefakte zu vermeiden, kann der dritte Zwischendatensatz 63 vor der Subtraktion skaliert werden. Die Ermittlung des Ausgangsdatensatzes A bzw. 65 aus dem weiteren Zwischendatensatz Z' bzw. 60 kann wie folgt ausgedrückt werden:

$$(3) \quad A = Z' - a \cdot AF(Z' - E^g)$$

Hierbei ist die Funktion AF die weitere Filterfunktion und a ein Skalierungsfaktor.

Als weitere Filterfunktion AF bzw. 62 kann beispielsweise ein Medianfilter verwendet werden, der gut geeignet ist, einen Rauschanteil zu unterdrücken.

Alternativ zu dem erläuterten Vorgehen wäre es prinzipiell auch möglich, als weitere Filterfunktion 62 eine Filterfunktion zu nutzen, die dazu eingerichtet ist, Artefakte aus der Differenz 61 zu filtern und somit letztlich nur den Rauschanteil des weiteren Eingangsdatensatzes 33 als dritten Zwischendatensatz 63 zu belassen. In diesem Fall kann der dritte Zwischendatensatz zweckmäßig von dem gewählten Eingangsdatensatz 33 subtrahiert werden, um den Rauschanteil unmittelbar zu entfernen.

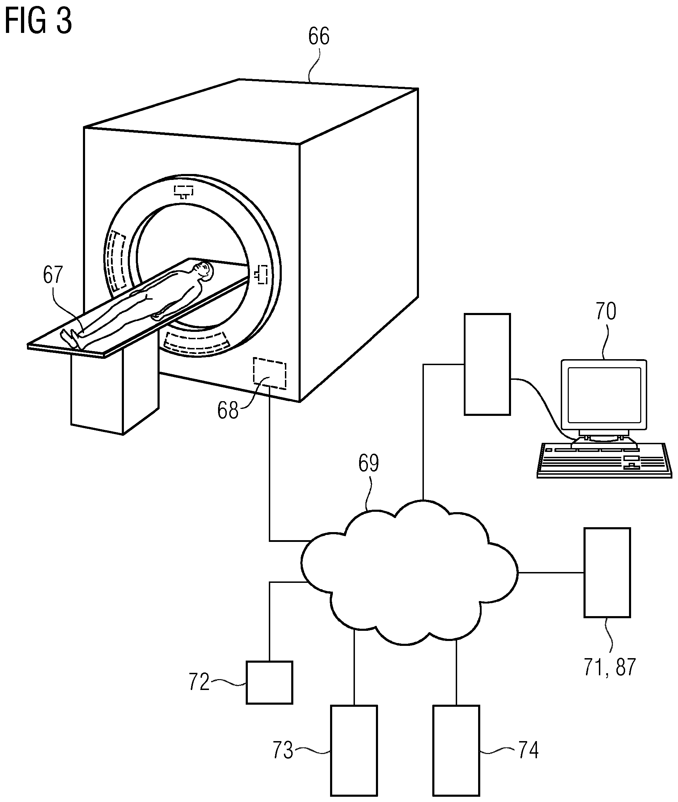

Fig. 3 zeigt eine medizinische Bildgebungseinrichtung 66, im Beispiel eine Computertomographieeinrichtung, durch die der gewählte Eingangsdatensatz und die weiteren Eingangsdatensätze, die das Untersuchungsobjekt 67 betreffen, erfasst werden können. Eine Steuereinrichtung 68, die den Betrieb der Bildgebungseinrichtung 66 steuert, kann entsprechende Messdaten über ein Netzwerk 69 an eine Auswerteeinrichtung 70, beispielsweise einen Arbeitsplatzrechner, bereitstellen.

Um eine Verbesserung der Bildqualität des gewählten Eingangsdatensatzes zu erreichen, wird eine Bereitstellungseinrichtung 71 genutzt, an die die Eingangsdatensätze bereitgestellt und durch die sie, wie bereits obig erläutert, verarbeitet werden. Die Bereitstellungseinrichtung 71 kann durch entsprechende Programmierung einer Datenverarbeitungseinrichtung 87 bereitgestellt werden. Der resultierende Ausgangsdatensatz kann unmittelbar an die Auswerteeinrichtung 70 bereitgestellt werden oder auch in einer Datenbank 72 gespeichert werden. Auch die Eingangsdaten können der Datenbank 72 entnommen sein und müssen nicht unmittelbar durch die medizinische Bildgebungseinrichtung 66 bereitgestellt werden.

In dem gezeigten Beispiel ist die Bereitstellungseinrichtung 71 als eine separate Einrichtung ausgebildet. Es kann jedoch auch vorteilhaft sein, die Bereitstellungseinrichtung 71 unmittelbar in die medizinische Bildgebungseinrichtung 66 zu integrieren, um unmittelbar Ausgangsdatensätze mit gesteigerter Bildqualität bereitstellen zu können. Beispielsweise kann die Steuereinrichtung 68 zusätzlich als Bereitstellungseinrichtung dienen.

Wie bereits obig erläutert, können die Algorithmen 35, 38 zur Registrierung der weiteren Eingangsdatensätze zu dem gewählten Eingangsdatensatz bzw. zur Ermittlung des Zwischendatensatzes jeweils durch ein Verfahren des Maschinenlernens trainiert sein. Ein derartiges Training erfolgt vorzugsweise auf einer separaten Trainingseinrichtung. Im Beispiel ist daher eine Trainingseinrichtung 73 zum Training des Algorithmus 35 und eine Trainingseinrichtung 74 zum Training des Algorithmus 38 dargestellt. Während im gezeigten Beispiel die Algorithmen bzw. Parameter, die diese parametrisieren, über das Netz 69 bereitgestellt werden, ist es auch möglich, sie anderweitig auf der Bereitstellungseinrichtung 71 zu installieren, so dass die gezeigte dauerhafte Netzwerkverbindung zwischen der Bereitstellungseinrichtung 71 und den Trainingseinrichtungen 73, 74 nicht erforderlich ist.

Fig. 4 zeigt eine mögliche Ausgestaltung eines Trainingsverfahrens zum Training des Algorithmus 35 zur Registrierung der Eingangsdatensätze. Hierbei werden zunächst einige Referenzdatensätze 75 bereitgestellt, die durch einen Verformungsalgorithmus 76 in Abhängigkeit von vorgegebenen Parametersätzen 77 verschoben und/oder rotiert und/oder skaliert und/oder verzerrt werden. Jedes Paar aus einem der mehreren Referenzdatensätze 75 und einem der Parametersätze 77 erzeugt somit einen modifizierten Referenzdatensatz 78.

Durch den Algorithmus 35 wird dann mit einer anfänglichen Parametrisierung zunächst versucht, die modifizierten Referenzdatensätze 78 einzeln oder in Gruppen zu einem jeweiligen der Referenzdatensätze 75 zu registrieren. Eine Kostenfunktion 80, die minimiert werden soll, kann die Registrierungsergebnisse 79 mit den Referenzdatensätzen 75 vergleichen, um ein Maß für deren Unterschied zu ermitteln. Die Parameter 36 werden derart variiert werden, dass die Kostenfunktion und somit das Maß für die Abweichung minimiert wird. Beispielsweise kann hierzu der an sich bekannte Ansatz der Fehlerrückführung verwendet werden.

Fig. 5 zeigt einen Ansatz zum Training des Algorithmus 38 zur Ermittlung des Zwischendatensatzes 39. Für den Zwischendatensatz 39 soll insbesondere eine Rauschreduzierung dadurch erfolgen, dass Bilddaten von mehreren Eingangsdatensätzen berücksichtigt werden, die das gleiche Untersuchungsobjekt zeigen und zueinander registriert sind. Trainingsdatensätze hierfür können in großer Menge dadurch bereitgestellt werden, dass zu Referenzdatensätzen 81 jeweils Rauschbilder 83 addiert werden, die durch einen Rauschgenerator 82 erzeugt werden. Hierdurch resultieren eine Vielzahl von verrauschten Referenzdatensätzen 84, die zumindest teilweise zueinander registriert sind und das gleiche Untersuchungsobjekt zeigen. Zumindest Teile der Rauschdatensätze 84, die zueinander registriert sind und das gleiche Untersuchungsobjekt zeigen, werden als gewählter Eingangsdatensatz und weitere Eingangsdatensätze dem Algorithmus 38 zugeführt, um einen jeweiligen Zwischendatensatz 85 zu erzeugen. Der entrauschte Zwischendatensatz 85 wird mit dem jeweiligen Referenzdatensatz 81 verglichen und eine Kostenfunktion 86, die ein Maß für den Unterschied zwischen dem Zwischendatensatz 85 und dem zugehörigen Referenzdatensatz 81 beschreibt, wird minimiert, indem die Parameter 40 des Algorithmus 38 variiert werden. Dies kann wiederum beispielsweise durch eine Fehlerrückführung erfolgen.

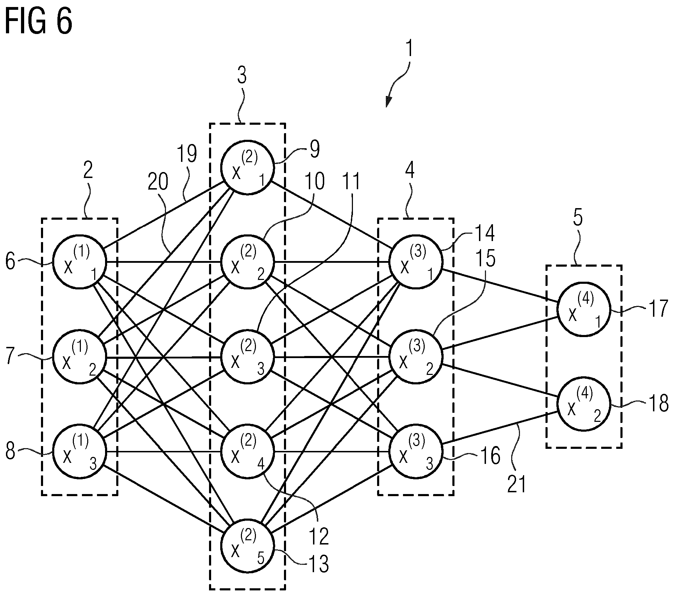

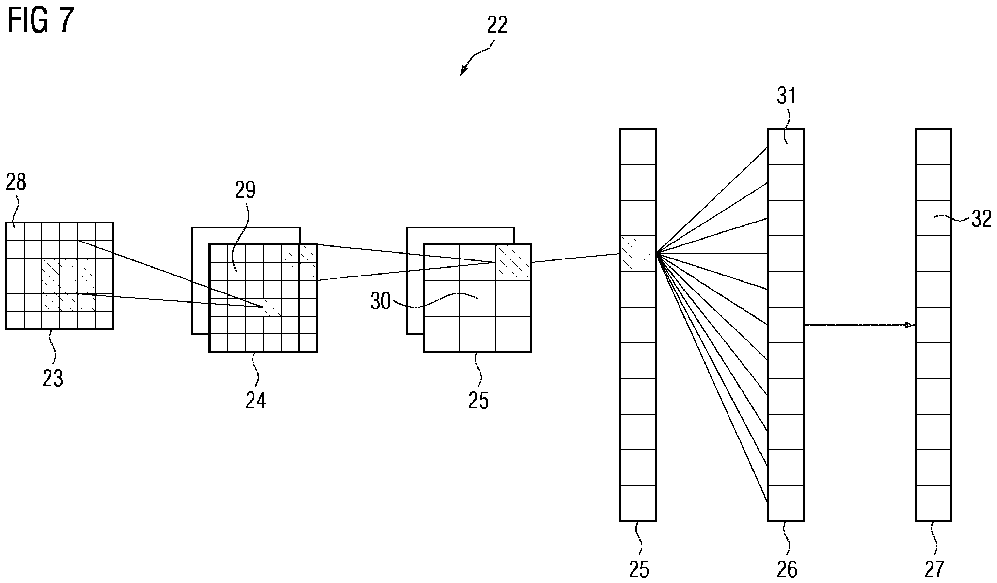

Mit Bezug auf die Figuren 6 und 7 werden im Folgenden am Beispiel eines neuronalen Netzes bzw. eines faltenden neuronalen Netzes Strukturen von Algorithmen erläutert, die durch Maschinenlernen trainierbar sind. Beispielsweise können entsprechende Strukturen für die Algorithmen 35, 38 verwendet werden. Die Strukturen werden jeweils an einfachen Beispielen beschrieben, die für reale Anwendungen entsprechend erweitert werden können.

Fig. 6 zeigt ein Ausführungsbeispiel eines künstlichen neuronalen Netzes 1. Englische Ausdrücke für das künstliche neuronale Netz 1 sind "artificial neural network", neural network", "artificial neural net" oder "neural net".

Das künstliche neuronale Netzwerk 1 umfasst Knoten 6 bis 18 (nodes) und Kanten 19 bis 21 (edges), wobei jede Kante 19 bis 21 eine gerichtete Verbindung von einem ersten Knoten 6 bis 18 zu einem zweiten Knoten 6 bis 18 ist. Im Allgemeinen sind der erste Knoten 6 bis 18 und der zweite Knoten 6 bis 18 unterschiedliche Knoten 6 bis 18, es ist jedoch auch denkbar, dass der erste Knoten 6 bis 18 und der zweite Knoten 6 bis 18 identisch sind. Beispielsweise ist in Fig. 6 die Kante 19 eine gerichtete Verbindung von dem Knoten 6 zu dem Knoten 9 und die Kante 21 ist eine gerichtete Verbindung von dem Knoten 16 zu dem Knoten 18. Eine Kante 19 bis 21 von einem ersten Knoten 6 bis 18 zu einem zweiten Knoten 6 bis 18 wird als eingehende Kante ("ingoing edge") für den zweiten Knoten 6 bis 18 und als ausgehende Kante ("outgoing edge") für den ersten Knoten 6 bis 18 bezeichnet.

In diesem Ausführungsbeispiel können die Knoten 6 bis 18 des künstlichen neuronalen Netzes 1 in Schichten 2 bis 5 (layers) angeordnet werden, wobei die Schichten 2 bis 5 eine intrinsische Ordnung aufweisen können, die durch die Kanten 19 bis 21 zwischen den Knoten 6 bis 18 eingeführt wird. Insbesondere können Kanten 19 bis 21 nur zwischen benachbarten Schichten von Knoten vorgesehen sein. Im dargestellten Ausführungsbeispiel existiert eine Eingabeschicht 2, die lediglich die Knoten 6, 7, 8 aufweist, jeweils ohne eingehende Kante. Die Ausgangsschicht 5 umfasst nur die Knoten 17, 18, jeweils ohne ausgehende Kanten, wobei ferner versteckte Schichten 3 und 4 zwischen der Eingangsschicht 2 und der Ausgangsschicht 5 liegen. Im Allgemeinen Fall kann die Zahl der versteckten Schichten 3, 4 beliebig gewählt werden. Die Zahl der Knoten 6, 7, 8 der Eingabeschicht 2 entspricht üblicherweise der Zahl der Eingabewerte in das neuronale Netzwerk 1, und die Zahl der Knoten 17, 18 in der Ausgangsschicht 5 entspricht üblicherweise der Zahl der Ausgabewerte des neuronalen Netzwerks 1.

Insbesondere kann den Knoten 6 bis 18 des neuronalen Netzwerks 1 eine (reale) Zahl zugeordnet werden. Dabei bezeichnet $x^{(n)}_i$ den Wert des i-ten Knoten 6 bis 18 der n-ten Schicht 2 bis 5. Die Werte der Knoten 6, 7, 8 der Eingabeschicht 2 sind äquivalent zu den Eingabewerten des neuronalen Netzwerks 1, während die Werte der Knoten 17, 18 der Ausgangsschicht 113 äquivalent zu den Ausgabewerten des neuronalen Netzwerks 1 sind. Darüber hinaus kann jeder Kante 19, 20, 21 ein Gewicht in Form einer realen Zahl zugeordnet sein. Insbesondere ist das Gewicht eine reale Zahl im Intervall [-1, 1] oder im Intervall [0, 1,]. Dabei bezeichnet $w^{(m,n)}_{i,j}$ das Gewicht der Kante zwischen dem i-ten Knoten 6 bis 18 der m-ten Schicht 2 bis 5 und dem j-ten Knoten 6 bis 18 der n-ten Schicht 2 bis 5. Ferner wird die Abkürzung $w^{(n)}_{i,j}$ für das Gewicht $w^{(n,n+1)}_{i,j}$ definiert.

Um Ausgangswerte des neuronalen Netzes 1 zu berechnen, werden die Eingangswerte durch das neuronale Netz 1 propagiert. Insbesondere können die Werte der Knoten 6 bis 18 der (n+1)-ten Schicht 2 bis 5 basierend auf den Werten der Knoten 6 bis 18 der n-ten Schicht 2 bis 5 berechnet werden durch

$$x^{(n+1)}_j \; = \; f\left( \sum_i x^{(n)}_i \cdot w^{(n)}_{i,j} \right).$$

Dabei ist f eine Transferfunktion, die auch als Aktivierungsfunktion bezeichnet werden kann. Bekannte Transferfunktionen sind Stufenfunktionen, Sigmoidfunktionen (beispielsweise die logistische Funktion, die verallgemeinerte logistische Funktion, der Tangens hyperbolicus, der Arkustangens, die Fehlerfunktion, die Smoothstep-Funktion) oder Gleichrichterfunktionen (rectifier). Die Transferfunktion wird im Wesentlichen für Normierungszwecke verwendet.

Insbesondere werden die Werte schichtweise durch das neuronale Netz 1 propagiert, wobei Werte der Eingangsschicht 2 durch die Eingangsdaten des neuronalen Netzes 1 gegeben sind. Werte der ersten versteckten Schicht 3 können basierend auf den Werten der Eingangsschicht 2 des neuronalen Netzes 1 berechnet werden, Werte der zweiten versteckten Schicht 4 können basierend auf den Werten in der ersten versteckten Schicht 3 berechnet werden usw.

Um die Werte $w^{(n)}_{i,j}$ für die Kanten 19 bis 21 festlegen zu können, muss das neuronale Netz 1 unter Verwendung von Trainingsdaten trainiert werden. Insbesondere umfassen Trainingsdaten Trainingseingangsdaten und Trainingsausgangsdaten, die im Folgenden als $t_i$ bezeichnet werden. Für einen Trainingsschritt wird das neuronale Netzwerk 1 auf die Trainingseingangsdaten angewendet, um berechnete Ausgangsdaten zu ermitteln. Insbesondere umfassen die Trainingsausgangsdaten und die berechneten Ausgangsdaten eine Zahl von Werten, wobei sich die Zahl als die Zahl der Knoten 17, 18 der Ausgangsschicht 5 bestimmt.

Insbesondere wird ein Vergleich zwischen den berechneten Ausgangsdaten und den Trainingsausgangsdaten verwendet, um die Gewichte innerhalb des neuronalen Netzes 1 rekursiv anzupassen (Rückpropagierungsalgorithmus - "back propagation algorithm"). Insbesondere können die Gewichte entsprechend

$$w'^{(n)}_{i,j} \; = \; w^{(n)}_{i,j} \; - \; \gamma \cdot \delta^{(n)}_j \cdot x^{(n)}_i$$

geändert werden, wobei $\gamma$ eine Lernrate ist und die Zahlen $\delta^{(n)}_j$ rekursiv berechnet werden können als

$$\delta^{(n)}_j \; = \; \left( \sum_k \delta^{(n+1)}_k \cdot w^{(n+1)}_{j,k} \right) \cdot f'\left( \sum_i x^{(n)}_i \cdot w^{(n)}_{i,j} \right)$$

basierend auf $\delta_j^{(n+1)}$, wenn die (n+1)-te Schicht nicht die Ausgangsschicht 5 ist, und

$$\delta_j^{(n)} = \left(x_k^{(n+1)} - t_j^{(n+1)}\right) \cdot f'\left(\sum_i x_i^{(n)} \cdot w_{i,j}^{(n)}\right)$$

falls die (n+1)-te Schicht die Ausgangsschicht 5 ist, wobei f' die erste Ableitung der Aktivierungsfunktion ist und $Y_j^{(n+1)}$ der Vergleichstrainingswert für den j-ten Knoten 17, 18 der Ausgangsschicht 5 ist.

Im Folgenden wird im Hinblick auf Fig. 7 auch ein Beispiel für ein Convolutional Neural Network (CNN) gegeben. Dabei ist zu beachten, dass der Ausdruck "Schicht" ("layer") dort auf leicht andere Art und Weise als für klassische neuronale Netze eingesetzt wird. Für ein klassisches neuronales Netz verweist der Ausdruck "Schicht" nur auf den Satz von Knoten, der eine Schicht bildet, mithin eine bestimmte Generation von Knoten. Für ein Convolutional Neural Network, wird der Ausdruck "Schicht" oft als ein Objekt benutzt, das aktiv Daten verändert, in anderen Worten als ein Satz von Knoten derselben Generation und entweder der Satz eingehender oder ausgehender Kanten.

Fig. 7 zeigt ein Ausführungsbeispiel eines Convolutional Neural Network 22. In dem dargestellten Ausführungsbeispiel umfasst das Convolutional Neural Network 22 eine Eingangsschicht 23, eine Faltungsschicht 24 (Convolutional Layer), eine Pooling-Schicht 25, eine vollständig verbundene Schicht 26 und eine Ausgangsschicht 27. In alternativen Ausgestaltungen kann das Convolutional Neural Network 22 mehrere Faltungsschichten 24, mehrere Pooling-Schichten 25 und mehrere vollständig verbundenen Schichten 26, ebenso wie andere Arten von Schichten, enthalten. Die Reihenfolge der Schichten kann beliebig gewählt werden, wobei üblicherweise vollständig verbundene Schichten 26 die letzten Schichten vor der Ausgangsschicht 27 bilden.

Insbesondere können innerhalb eines Convolutional Neural Network 22 die Knoten 28 bis 32 einer der Schichten 23 bis 27 als d-dimensionale Matrix oder als d-dimensionales Bild angeordnet sein. Insbesondere kann im zweidimensionalen Fall der Wert eines Knotens 28 bis 32 mit den Indices i, j in der n-ten Schicht 23 bis 27 als $x^{(n)}$ [i,j] bezeichnet werden. Es ist darauf hinzuweisen, dass die Anordnung der Knoten 28 bis 31 einer Schicht 23 bis 27 keinerlei Auswirkung auf die Berechnungen innerhalb des Convolutional Neural Network 22 als solches hat, da diese Auswirkung ausschließlich durch die Struktur und die Gewichte der Kanten gegeben sind.

Eine Faltungsschicht 24 ist insbesondere dadurch ausgezeichnet, dass die Struktur und die Gewichte der eingehenden Kanten eine Faltungsoperation basierend auf einer bestimmten Zahl von Kernen bildet. Insbesondere können die Struktur und die Gewichte der eingehenden Kanten so gewählt werden, dass die Werte $x_k^{(n)}$ der Knoten 29 der Faltungsschicht 24 als eine Faltung $x_k^{(n)} = K_k * x^{(n-1)}$ basierend auf den Werten $x^{(n-1)}$ der Knoten 28 der vorangehenden Schicht 23 ermittelt werden, wobei die Faltung * im zweidimensionalen Fall definiert werden kann als

$$x_k^{(n)}[i,j] = (K_k * x^{(n-1)})[i,j] = \sum_{i'} \sum_{j'} K_k[i',j'] \cdot x^{(n-1)}[i-i', j-j'].$$

Darin ist der k-te Kern $K_k$ eine d-dimensionale Matrix, in diesem Ausführungsbeispiel eine zweidimensionale Matrix, die üblicherweise klein im Vergleich zur Zahl der Knoten 28 bis 32 ist, beispielsweise eine 3x3-Matrix oder eine 5x5-Matrix. Insbesondere impliziert dies, dass die Gewichte der eingehenden Kanten nicht unabhängig sind, sondern so gewählt sind, dass sie die obige Faltungsgleichung erzeugen. Im Beispiel für einen Kern, der eine 3x3-Matrix bildet, existieren nur neun unabhängige Gewichte (wobei jeder Eintrag der Kern-Matrix einem unabhängigen Gewicht entspricht), ungeachtet der Zahl der Knoten 28 bis 32 in der entsprechenden Schicht 23 bis 27. Insbesondere ist für eine Faltungsschicht 24 die Zahl der Knoten 29 in der Faltungsschicht 24 äquivalent der Zahl der Knoten 28 in der vorangehenden Schicht 23 multipliziert mit der Zahl der Faltungskerne.

Wenn die Knoten 28 der vorangehenden Schicht 23 als eine d-dimensionale Matrix angeordnet sind, kann die Nutzung der Mehrzahl von Kernen als Hinzufügung einer weiteren Dimension, die auch als Tiefendimension bezeichnet wird, verstanden werden, so dass die Knoten 29 der Faltungsschicht 24 als eine (d+1)-dimensionale Matrix angeordnet sind. Wenn die Knoten 28 der vorangehenden Schicht 23 bereits als eine (d+1)-dimensionale Matrix mit einer Tiefendimension angeordnet sind, kann die Nutzung einer Mehrzahl von Faltungskernen als Expansion entlang der Tiefendimension verstanden werden, so dass die Knoten 29 der Faltungsschicht 221 gleichermaßen als eine (d+1)-dimensionale Matrix angeordnet sind, wobei die Größe der (d+1)-dimensionalen Matrix in der Tiefendimension um den durch die Zahl der Kerne gebildeten Faktor größer ist als in der vorangehenden Schicht 23.

Der Vorteil der Nutzung von Faltungsschichten 24 ist, dass die räumlich lokale Korrelation der Eingangsdaten ausgenutzt werden kann, indem ein lokales Verbindungsmuster zwischen Knoten benachbarter Schichten geschaffen wird, insbesondere dadurch, dass jeder Knoten nur zu einem kleinen Bereich der Knoten der vorangehenden Schicht Verbindungen aufweist.

Im dargestellten Ausführungsbeispiel umfasst die Eingangsschicht 23 36 Knoten 28, die als eine zweidimensionale 6x6-Matrix angeordnet sind. Die Faltungsschicht 24 umfasst 72 Knoten 29, die als zwei zweidimensionale 6x6-Matrizen angeordnet sind, wobei jede der beiden Matrizen das Ergebnis einer Faltung der Werte der Eingangsschicht 23 mit einem Faltungskern ist. In gleicher Weise können die Knoten 29 der Faltungsschicht 24 als in einer dreidimensionalen 6x6x2-Matrix angeordnet verstanden werden, wobei die zuletzt genannte Dimension die Tiefendimension ist.

Eine Pooling-Schicht 25 zeichnet sich dadurch aus, dass die Struktur und die Gewichte der eingehenden Kanten sowie die Aktivierungsfunktion ihrer Knoten 30 eine Pooling-Operation basierend auf einer nicht linearen Pooling-Funktion f definieren. Beispielsweise können im zweidimensionalen Fall die Werte $x^{(n)}$ der Knoten 30 der Pooling-Schicht 25 basierend auf den Werten $x^{(n+1)}$ der Knoten 29 der vorangehenden Schicht 24 als

$$x^{(n)}[i,j] = f(x^{(n-1)}[id_1, jd_2], …, x^{(n-1)}[id_1+d_1-1, jd_2+d_2-1])$$

berechnet werden. In anderen Worten kann durch die Verwendung einer Pooling-Schicht 25 die Zahl der Knoten 29, 30 reduziert werden, indem eine Anzahl von $d_1*d_2$ benachbarter Knoten 29 in der vorangehenden Schicht 24 durch einen einzelnen Knoten 30 ersetzt wird, der als eine Funktion der Werte der genannten Anzahl benachbarter Knoten 29 berechnet wird. Insbesondere kann die Pooling-Funktion f eine Maximusfunktion, eine Durchschnittsbildung oder die L2-Norm sein. Insbesondere können für eine Pooling-Schicht 25 die Gewichte der eingehenden Kanten festgelegt sein und nicht durch Training modifiziert sein.

Der Vorteil der Verwendung einer Pooling-Schicht 25 ist, dass die Zahl der Knoten 29, 30 und die Zahl der Parameter reduziert wird. Dies führt zu einer Reduktion der notwendigen Berechnungsmenge innerhalb des Convolutional Neural Network 22 und somit zu einer Unterdrückung einer Überanpassung.

Im dargestellten Ausführungsbeispiel handelt es sich bei der Pooling-Schicht 25 um eine Max-Pooling-Schicht, in der vier benachbarte Knoten durch einen einzigen Knoten ersetzt werden, dessen Wert durch das Maximum der Werte der vier benachbarten Knoten gebildet wird. Das Max-Pooling wird auf jede d-dimensionale Matrix der vorherigen Schicht angewendet; in diesem Ausführungsbeispiel wird das Max-Pooling auf jede der zwei zweidimensionalen Matrizen angewendet, so dass sich die Zahl der Knoten von 72 auf 18 reduziert.

Eine vollständig verbundene Schicht 26 zeichnet sich dadurch aus, dass eine Mehrzahl, insbesondere alle, Kanten zwischen den Knoten 30 der vorherigen Schicht 25 und den Knoten 31 der vollständig verbundenen Schicht 26 vorhanden sind, wobei das Gewicht jeder der Kanten individuell angepasst werden kann. In diesem Ausführungsbeispiel werden die Knoten 30 der der vollständig verbundenen Schicht 26 vorangehenden Schicht 25 sowohl als zweidimensionale Matrizen als auch als nichtzusammenhängende Knoten (dargestellt als eine Zeile von Knoten, wobei die Zahl der Knoten zur besseren Darstellbarkeit reduziert wurde) gezeigt. In diesem Ausführungsbeispiel ist die Zahl der Knoten 31 in der vollständig verbundenen Schicht 26 gleich der Anzahl der Knoten 30 in der vorangehenden Schicht 25. In alternativen Ausführungsformen kann die Zahl der Knoten 30, 31 unterschiedlich sein.

Darüber hinaus werden in diesem Ausführungsbeispiel die Werte der Knoten 32 der Ausgangsschicht 27 bestimmt, indem die Softmax-Funktion auf die Werte der Knoten 31 der vorangehenden Schicht 26 angewendet wird. Durch Anwendung der Softmax-Funktion ist die Summe der Werte aller Knoten 32 der Ausgangsschicht 27 eins und alle Werte aller Knoten 32 der Ausgangsschicht sind reelle Zahlen zwischen 0 und 1. Wenn das Convolutional Neural Network 22 zur Klassifizierung von Eingangsdaten genutzt wird, können insbesondere die Werte der Ausgangsschicht 27 als Wahrscheinlichkeit dafür interpretiert werden, dass die Eingangsdaten in eine der unterschiedlichen Klassen fallen.

Ein Convolutional Neural Network 22 kann ebenso eine ReLU-Schicht aufweisen, wobei ReLU als Akronym für "rectified linear units" steht. Insbesondere ist die Zahl der Knoten und die Struktur der Knoten innerhalb einer ReLU-Schicht äquivalent zu der Zahl der Knoten und der Strukturen der Knoten der vorangehenden Schicht. Der Wert jedes Knotens in der ReLU-Schicht kann insbesondere durch Anwendung einer Gleichrichtungsfunktion (rectifier function) auf den Wert des entsprechenden Knoten der vorangehenden Schicht berechnet werden. Beispiele für Gleichrichterfunktionen sind f(x)=max(0,x), der Tangens hyperbolicus oder die Sigmoidfunktion.

Convolutional Neural Networks 22 können insbesondere basierend auf den Rückpropagierungsalgorithmus trainiert werden.

Um eine Überanpassung (overfitting) zu vermeiden, können Verfahren der Regularisierung eingesetzt werden, beispielsweise ein Dropout einzelner Knoten 28 bis 32, stochastisches Pooling, Nutzen von künstlichen Daten, Gewichtszerfall basierend auf der L1- oder der L2-Norm oder Maximalnorm-Einschränkungen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann im Umfang der angehängten Ansprüche abgeleitet werden, ohne den Schutzumfang der Erfindung zu verlassen.

**Patentansprüche**

1. Computerimplementiertes Verfahren zur Bereitstellung eines Ausgangsdatensatzes (65) mit einem gegenüber einem gewählten Eingangsdatensatz (33) reduzierten Rauschen, wobei der gewählte Eingangsdatensatz (33) und wenigstens ein das gleiche Untersuchungsobjekt (67) betreffender weiterer Eingangsdatensatz (34, 37) durch ein medizinisches Bildgebungsverfahren ermittelt sind, wobei der gewählte Eingangsdatensatz (33) und der wenigstens eine weitere Eingangsdatensatz (34, 37) zu unterschiedlichen Zeitpunkten der gleichen Untersuchung oder Behandlung des Untersuchungsobjekts (67) und/oder mit voneinander unterschiedlichen Aufnahmeparametern aufgenommen sind oder werden, wobei der weitere Eingangsdatensatz (34, 37) zu dem gewählten Eingangsdatensatz registriert ist oder wird, das die folgenden Schritte umfasst:

   - Ermitteln eines Zwischendatensatzes (39), wobei die Bilddaten der Bildpunkte oder Voxel (43) des Zwischendatensatzes (39) jeweils von den Bilddaten eines jeweiligen zugeordneten Bildpunktes oder Voxels (41, 42) des gewählten Eingangsdatensatzes (33) und des weiteren Eingangsdatensatzes (37) abhängen, wobei aufgrund der Kombination von den Bilddaten der mehreren zueinander registrierten Eingangsdatensätze ein gegenüber dem gewählten Eingangsdatensatz (33) reduziertes Rauschen in dem Zwischendatensatz (39) erreicht wird,
   - Anwenden wenigstens einer Filterfunktion (44 - 46) auf den gewählten Eingangsdatensatz (33), um einen jeweiligen gefilterten Eingangsdatensatz (47 - 49) zu erzeugen,
   - Anwenden wenigstens einer Filterfunktion (44 - 46) auf den Zwischendatensatz (39), um einen jeweiligen gefilterten Zwischendatensatz (50 - 52) zu erzeugen, und
   - Ermitteln des Ausgangsdatensatzes (65) oder eines weiteren Zwischendatensatzes (60), in Abhängigkeit dessen der Ausgangsdatensatz (65) ermittelt wird, als Summe oder gewichtete Summe des wenigstens einen gefilterten Eingangsdatensatzes (47 - 49) und des wenigstens einen gefilterten Zwischendatensatzes (50 - 52).

2. Computerimplementiertes Verfahren nach Anspruch 1, **dadurch gekennzeichnet, dass** die gefilterten Eingangsdatensätze (47 - 49) jeweils einem Frequenzbereich von Raumfrequenzen zugeordnet sind, wobei Raumfrequenzen außerhalb des jeweiligen zugeordneten Frequenzbereichs gegenüber dem gewählten Eingangsdatensatz (33) durch Anwenden der jeweiligen Filterfunktion (44 - 46) unterdrückt oder ihre Amplituden reduziert werden, und/oder dass die gefilterten Zwischendatensätze (50 - 52) jeweils einem Frequenzbereich von Raumfrequenzen zugeordnet sind, wobei Raumfrequenzen außerhalb des jeweiligen zugeordneten Frequenzbereichs gegenüber dem Zwischendatensatz (39) durch Anwenden der jeweiligen Filterfunktion (44 - 46) unterdrückt oder ihre Amplituden reduziert werden.

3. Computerimplementiertes Verfahren nach Anspruch 2, **dadurch gekennzeichnet, dass**

   - einerseits für einen höchsten Frequenzbereich entweder ausschließlich ein gefilterter Zwischendatensatz (50 - 52) und kein gefilterter Eingangsdatensatz (47

   - 49) ermittelt wird oder bei der Berechnung des Weiteren Zwischendatensatzes (60) oder des Ausgangsdatensatzes (65) der gefilterte Zwischendatensatz (50 - 52) stärker gewichtet wird als der gefilterten Eingangsdatensatz (47 - 49), und/oder

   - andererseits für einen niedrigsten Frequenzbereich entweder ausschließlich ein gefilterter Eingangsdatensatz (47 - 49) und kein gefilterter Zwischendatensatz (50 - 52) ermittelt wird oder bei der Berechnung des Weiteren Zwischendatensatzes (60) oder des Ausgangsdatensatzes (65) der gefilterte Eingangsdatensatz (47 - 49) stärker gewichtet wird als der gefilterten Zwischendatensatz (50 - 52).

4. Computerimplementiertes Verfahren nach einem der vorangehenden Ansprüche, **dadurch gekennzeichnet, dass** ein dritter Zwischendatensatz (63) ermittelt wird, indem eine weitere Filterfunktion (62) auf eine Differenz (61) zwischen dem gewählten Eingangsdatensatzes (33) und dem weiteren Zwischendatensatz (60) angewandt wird, wobei der Ausgangsdatensatz (65) ermittelt wird, indem der dritte Zwischendatensatz (63), insbesondere nach einer Skalierung, von dem weiteren Zwischendatensatz (60) oder von dem gewählten Eingangsdatensatz (33) abgezogen wird.

5. Computerimplementiertes Verfahren nach einem der vorangehenden Ansprüche, **dadurch gekennzeichnet, dass** mehrere weitere Eingangsdatensätze (34, 37) bereitgestellt werden, die durch einen Algorithmus (35) zu dem gewählten Eingangsdatensatz (33) registriert werden oder sind, der eine elastische Registrierung durchführt und/oder der durch ein Verfahren des Maschinenlernens trainiert ist.

6. Computerimplementiertes Verfahren nach einem der vorangehenden Ansprüche, **dadurch gekennzeichnet, dass** die Bilddaten eines jeweiligen Bildpunktes oder Voxels (43) des Zwischendatensatzes (39) in Abhängigkeit der Summe oder der gewichteten Summe der Bilddaten des jeweiligen zugeordneten Bildpunktes oder Voxels (41, 42) des gewählten Eingangsdatensatzes (33) und des weiteren Eingangsdatensatzes (37) oder wenigstens eines der weiteren Eingangsdatensätze (37) ermittelt werden.

7. Computerimplementiertes Verfahren nach Anspruch 6, **dadurch gekennzeichnet, dass** die Berücksichtigung der Bilddaten oder der Gewichtungsfaktor für die Bilddaten des jeweiligen zugeordneten Bildpunktes oder Voxels (42) des jeweiligen weiteren Eingangsdatensatzes (37) von einem Maß für einen Unterschied zwischen den Bilddaten dieses Bildpunkts oder Voxels (42) und den Bilddaten des zugeordneten Bildpunktes oder Voxels (41) des gewählten Eingangsdatensatzes (33) abhängig ist.

8. Computerimplementiertes Verfahren nach einem der vorangehenden Ansprüche, **dadurch gekennzeichnet, dass** der Zwischendatensatz (39) durch einen Algorithmus (38) ermittelt wird, der durch ein Verfahren des Maschinenlernens trainiert ist.

9. Computerimplementiertes Verfahren nach einem der vorangehenden Ansprüche, **dadurch gekennzeichnet, dass** wenigstens eine der Filterfunktionen (44 - 46) jeweils sowohl auf den gewählten Eingangsdatensatz (33) als auch auf den Zwischendatensatz (39) angewandt wird, wobei sich die Gewichtungsfaktoren (53 - 58), mit denen der aus der Anwendung der jeweiligen Filterfunktion (44 - 46) resultierende gefilterte Eingangsdatensatz (47 - 49) und gefilterte Zwischendatensatz (50 - 52) bei der Berechnung des weiteren Zwischendatensatzes (60) oder des Ausgangsdatensatzes (65) gewichtet werden, zu eins addieren.

10. Computerimplementiertes Verfahren nach einem der vorangehenden Ansprüche, **dadurch gekennzeichnet, dass** auf den gewählten Eingangsdatensatz (33) mehrere Filterfunktionen (44 - 46) angewandt werden, die derart gewählt sind, dass die Summe der gefilterten Eingangsdatensätze (47 - 49) dem gewählten Eingangsdatensatz (33) entspricht, und/oder dass auf den Zwischendatensatz (39) mehrere Filterfunktionen (44 - 46) angewandt werden, die derart gewählt sind, dass die Summe der gefilterten Zwischendatensätze (50 - 52) dem Zwischendatensatz (39) entspricht.

11. Computerimplementiertes Verfahren nach einem der vorangehenden Ansprüche, **dadurch gekennzeichnet, dass** der gewählte Eingangsdatensatz (33) und der wenigstens eine weitere Eingangsdatensatz (34, 37) zu unterschiedlichen Zeitpunkten der gleichen Untersuchung oder Behandlung des Untersuchungsobjekts (67), nämlich in unterschiedlichen Bewegungsphasen eines Organs des Untersuchungsobjekts, und/oder mit gleicher Aufnahmegeometrie aufgenommen sind oder werden.

12. Bereitstellungseinrichtung (71), die zur Durchführung des computerimplementierten Verfahrens nach einem der vorangehenden Ansprüche eingerichtet ist.

13. Medizinische Bildgebungseinrichtung (66), insbesondere Computertomographieeinrichtung, umfassend eine Bereitstellungseinrichtung (71) gemäß Anspruch 12.

14. Computerprogramm für eine Datenverarbeitungseinrichtung (87) mit Programmanweisungen, die bei einer Durchführung auf einer Datenverarbeitungseinrichtung (87) ein computerimplementiertes Verfahren nach einem der Ansprüche 1 bis 11 durchführen.

15. Computerlesbarer Datenträger, umfassend ein Computerprogramm nach Anspruch 14.

**Claims**

1. Computer-implemented method for providing an output dataset (65) with a reduced noise compared with a selected input dataset (33), wherein the selected input dataset (33) and at least one further input dataset (34, 37) relating to the same examination object (67) are determined by a medical imaging method, wherein the selected input dataset (33) and the at least one further input dataset (34, 37) are recorded at different points in time during the same examination or treatment of the examination object (67) and/or with recording parameters which differ from one another, wherein the further input dataset (34, 37) is or will be registered to the selected input dataset, which comprises the following steps:

- determining an intermediate dataset (39), wherein the image data of the image points or voxels (43) of the intermediate dataset (39) in each case depend on the image data of a respective assigned image point or voxel (41, 42) of the selected input dataset (33) and the further input dataset (37), wherein on account of the combination of the image data of the several input datasets registered with one another a reduced noise compared with the selected input dataset (33) is achieved in the intermediate dataset (39),
- applying at least one filter function (44-46) to the selected input dataset (33), in order to generate a respective filtered input dataset (47-49),
- applying at least one filter function (44-46) to the intermediate dataset (39) in order to generate a respective filtered intermediate dataset (50-52), and
- determining the output dataset (65) or a further intermediate dataset (60), as a function of which the output dataset (65) is determined, as a total or weighted total of the at least one filtered input dataset (47-49) and the at least one filtered intermediate dataset (50-52).

2. Computer-implemented method according to claim 1, **characterised in that** the filtered input datasets (47-49) are in each case assigned to a frequency range of spatial frequencies, wherein spatial frequencies outside of the respective assigned frequency range are suppressed compared with the selected input dataset (33) by applying the respective filter function (44-46) or their amplitudes are reduced,

and/or the filtered intermediate datasets (50-52) are in each case assigned to a frequency range of spatial frequencies, wherein spatial frequencies outside of the respective assigned frequency range are suppressed compared with the intermediate dataset (39) by applying the respective filter function (44-46) or their amplitudes are reduced.

3. Computer-implemented method according to claim 2, **characterised in that**

- on the one hand, for a highest frequency range, either exclusively a filtered intermediate dataset (50-52) and no filtered input dataset (47-49) is determined or with the calculation of the further intermediate dataset (60) or the output dataset (65), the filtered intermediate dataset (50-52) is weighted more heavily than the filtered input dataset (47-49), and/or
- on the other hand, for a lowest frequency range, either exclusively a filtered input dataset (47-49) and no filtered intermediate dataset (50-52) is determined or with the calculation of the further intermediate dataset (60) or the output dataset (65), the filtered input dataset (47-49) is weighted more heavily than the filtered intermediate dataset (50-52).

4. Computer-implemented method according to one of the preceding claims, **characterised in that** a third intermediate dataset (63) is determined by a further filter function (62) being applied to a difference (61) between the selected input dataset (33) and the further intermediate dataset (60), wherein the output dataset (65) is determined by the third intermediate dataset (63), in particular in accordance with a scaling, being subtracted from the further intermediate dataset (60) or from the selected input dataset (33).

5. Computer-implemented method according to one of the preceding claims, **characterised in that** a number of further input datasets (34, 37) are provided, which will be or are registered with the selected input dataset (33) by an algorithm (35), said input dataset carrying out an elastic registration and/or being trained by a machine learning method.

6. Computer-implemented method according to one of the preceding claims, **characterised in that** the image data of a respective image point or voxel (43) of the intermediate dataset (39) is determined as a function of the total or the weighted total of the image data of the respective assigned image point or voxel (41, 42) of the selected input dataset (33) and of the further input dataset (37) or of at least one of the further input datasets (37).

7. Computer-implemented method according to claim 6, **characterised in that** the consideration of the image data or the weighting factor for the image data of the respective assigned image point or voxel (42) of the respective further input dataset (37) is dependent on a measure of a difference between the image data of this image point or voxel (42) and the image data of the assigned image point or voxel (41) of the selected input dataset (33).

8. Computer-implemented method according to one of the preceding claims, **characterised in that** the intermediate dataset (39) is determined by an algorithm (38) which is trained by a machine learning method.

9. Computer-implemented method according to one of the preceding claims, **characterised in that** at least one of the filter functions (44-46) is applied in each case both to the selected input dataset (33) and also to the intermediate dataset (39), wherein the weighting factors (53-58) add up to form one, with which weighting factors (53-58) the filtered input dataset (47-49) resulting from the application of the respective filter function (44-46) and filtered intermediate dataset (50-52) are weighted upon calculation of the further intermediate dataset (60) or the output dataset (65).

10. Computer-implemented method according to one of the preceding claims, **characterised in that** a number of filter functions (44-46) are applied to the selected input dataset (33), which are selected such that the total of the filtered input datasets (47-49) corresponds to the selected input dataset (33), and/or
a number of filter functions (44-46) is applied to the intermediate dataset (39), said filter functions (44-46) being selected so that the total of the filtered intermediate datasets (50-52) corresponds to the intermediate dataset (39).

11. Computer-implemented method according to one of the preceding claims, **characterised in that** the selected input dataset (33) and the at least one further input dataset (34, 37) are or will be recorded at different points in time during the same examination or treatment of the examination object (67), namely in different movement phases of an organ of the examination object and/or with the same recording geometry.

12. Provisioning facility (71), which is designed to carry out the computer-implemented method according to one of the preceding claims.

13. Medical imaging facility (66), in particular computed tomography facility, comprising a provisioning facilty (71) according to claim 12.

14. Computer program for a data processing facility (87) with program instructions, which, upon execution on a data processing facility (87), carry out a computer-implemented method according to one of claims 1 to 11.

15. Computer-readable data carrier, comprising a computer program according to claim 14.

**Revendications**

1. Procédé mis en œuvre par ordinateur pour disposer d'un ensemble (65) de données de sortie ayant un bruit réduit par rapport à un ensemble (33) de données d'entrée sélectionné, dans lequel l'ensemble (33) de données d'entrée sélectionné et au moins un autre ensemble (34, 37) de données d'entrée concernant le même objet (67) à examiner sont déterminés par un procédé d'imagerie médicale, dans lequel l'ensemble (33) de données d'entrée sélectionné et le au moins un autre ensemble (34, 37) de données d'entrée sont enregistrés à des instants différents du même examen ou traitement de l'objet (67) à examiner et/ou avec des paramètres d'enregistrement différents les uns des autres, dans lequel l'autre ensemble (34, 37) de données d'entrée est ou sera mis en correspondance avec l'ensemble de données d'entrée sélectionné, qui comprend les stades suivants :

- détermination d'un ensemble (39) de données intermédiaire, dans lequel les données d'image des points image ou voxel (43) de l'ensemble (39) de données intermédiaire dépendent respectivement des données d'image d'un point d'image ou voxel (41, 42) affecté respectivement de l'ensemble (33) de données d'entrée sélectionné et de l'autre ensemble (37) de données d'entrée, dans lequel, sur la base de la combinaison des données d'image des plusieurs ensembles de données d'entrée se correspondant l'un à l'autre, on obtient, dans l'ensemble (39) de données intermédiaire, un bruit réduit par rapport à l'ensemble (33) de données d'entrée sélectionné,
- application d'au moins une fonction (44 à 46) de filtrage à l'ensemble (33) de données d'entrée sélectionné afin de produire un ensemble (47 à 49) de données d'entrée filtré respectif,
- application d'au moins une fonction (44 à 46) de filtrage à l'ensemble (39) de données intermédiaire afin de produire un ensemble (50 à 52) de données intermédiaire filtré respectif, et
- détermination de l'ensemble (65) de données de sortie ou d'un autre ensemble (60) de données intermédiaire, en fonction duquel on détermine l'ensemble (65) de données de sortie comme somme ou somme pondérée du au moins un ensemble (47 à 49) de données d'entrée filtré et du au moins un ensemble (50 à 52) de données intermédiaire filtré.

2. Procédé mis en œuvre par ordinateur suivant la revendication 1,

**caractérisé en ce que** les ensembles (47 à 49) de données d'entrée filtrés sont affectés respectivement à un domaine de fréquences spatiales, dans lequel des fréquences spatiales, à l'extérieur du domaine de fréquence affecté respectif, sont, par application de la fonction (44 à 46) de filtrage respective, supprimées ou leurs amplitudes sont réduites par rapport à l'ensemble (33) de données d'entrée sélectionné, et/ou **en ce que** les ensembles (50 à 52) de données intermédiaires filtrés sont affectés respectivement à un domaine de fréquence spatiale, dans lequel des fréquences spatiales, à l'extérieur du domaine de fréquence affecté respectif, sont, par application de la fonction (44 à 46) de filtrage respective, supprimées ou leurs amplitudes sont réduites par rapport à l'ensemble (39) de données intermédiaire.

3. Procédé mis en œuvre par ordinateur suivant la revendication 2,
**caractérisé en ce que**

- d'une part, pour un domaine de fréquence très haut, ou bien exclusivement un ensemble (50 à 52) de données intermédiaire filtré et pas d'ensemble (47 à 49) de données d'entrée filtré est déterminé, ou bien, lors du calcul de l'autre ensemble (60) de données intermédiaire ou de l'ensemble (65) de données de sortie, l'ensemble (50 à 52) de données intermédiaire filtré est pondéré plus fortement que l'ensemble (47 à 49) de données d'entrée filtré, et/ou

- d'autre part, pour un domaine de fréquence très bas, ou bien exclusivement un ensemble (47 à 49) de données d'entrée filtré et pas d'ensemble (50 à 52) de données intermédiaire filtré est déterminé, ou bien, lors du calcul de l'autre ensemble (60) de données intermédiaire ou de l'ensemble (65) de données de sortie, l'ensemble (47 à 49) de données d'entrée filtré est pondéré plus fortement que l'ensemble (50 à 52) de données intermédiaire filtré.

4. Procédé mis en œuvre par ordinateur suivant l'une des revendications précédentes, **caractérisé en ce qu'**un troisième ensemble (63) de données intermédiaire est déterminé en appliquant une autre fonction (62) de filtrage à une différence (61) entre l'ensemble (33) de données d'entrée sélectionné et l'autre ensemble (60) de données intermédiaire, dans lequel l'ensemble (65) de données de sortie est déterminé en retirant le troisième ensemble (63) de données intermédiaire, en particulier après une mise à l'échelle, de l'autre ensemble (60) de données intermédiaire ou de l'ensemble (33) de données d'entrée sélectionné.

5. Procédé mis en œuvre par ordinateur suivant l'une des revendications précédentes, en ce que sont mis à disposition plusieurs autres ensembles (34, 37) de données d'entrée, qui sont ou seront par un algorithme (35) mis en correspondance avec l'ensemble (33) de données d'entrée sélectionné, qui effectue une mise en correspondance élastique et/ou qui est entraîné par un procédé de l'apprentissage par machine.

6. Procédé mis en œuvre par ordinateur suivant l'une des revendications précédentes, **caractérisé en ce que** les données d'image d'un point d'image ou d'un voxel (43) respectif de l'ensemble (39) de données intermédiaire, sont déterminées en fonction de la somme ou de la somme pondérée des données d'image du point d'image ou du voxel (41, 42) affecté respectif de l'ensemble (33) de données d'entrée sélectionné et de l'autre ensemble (37) de données d'entrée ou au moins de l'un des autres ensembles (37) de données d'entrée.

7. Procédé mis en œuvre par ordinateur suivant la revendication 6,
**caractérisé en ce que** la prise en compte des données d'image ou du facteur de pondération pour des données d'image du point d'image ou voxel (42) affecté respectivement de l'autre ensemble (37) de données d'entrée respectif dépend d'une mesure de la différence entre les données d'image de ce point d'image ou voxel (42) et les données d'image du point d'image ou voxel (41) affecté de l'ensemble (33) de données d'entrée sélectionné.

8. Procédé mis en œuvre par ordinateur suivant l'une des revendications précédentes, **caractérisé en ce que** l'ensemble (39) de données intermédiaire est déterminé par un algorithme (38), qui est entraîné par un procédé de l'apprentissage par machine.

9. Procédé mis en œuvre par ordinateur suivant l'une des revendications précédentes, **caractérisé en ce qu'**au moins l'une des fonctions (44 à 46) de filtrage est appliquée respectivement, à la fois à l'ensemble (33) de données d'entrée sélectionné et à l'ensemble (39) de données intermédiaire, dans lequel les facteurs (53 à 58) de pondération, par lesquels l'ensemble (47 à 49) de données d'entrée filtré, résultant de l'application de la fonction (44 à 46) de filtrage respective, et l'ensemble (50 à 52) de données intermédiaire filtré sont pondérés lors du calcul de l'autre ensemble (60) de données intermédiaire ou de l'ensemble (65) de données de sortie, s'additionnent à un.

10. Procédé mis en œuvre par ordinateur suivant l'une des revendications précédentes, **caractérisé en ce que**, à l'ensemble (33) de données d'entrée sélectionné, sont appliquées plusieurs fonctions (44 à 46) de filtrage, qui sont sélectionnés de manière à ce que la somme des ensembles (47 à 49) de données d'entrée filtrés correspondent à l'ensemble (33) de données d'entrée sélectionné, et/ou

**EP 3 816 930 B1**

**en ce que**, à l'ensemble (39) de données intermédiaire, sont appliquées plusieurs fonctions (44 à 46) de filtrage, qui sont sélectionnées de manière à ce que la somme des ensembles (50 à 52) de données intermédiaires filtrés correspondent à l'ensemble (39) de données intermédiaire.

11. Procédé mis en œuvre par ordinateur suivant l'une des revendications précédentes, **caractérisé en ce que** l'ensemble (33) de données d'entrée sélectionné et le au moins un autre ensemble (34, 37) de données d'entrée sont ou seront enregistrés à des instants différents du même examen ou traitement de l'objet (67) à examiner, à savoir dans des phases de déplacement différentes d'un organe de l'objet à examiner et/ou avec une même géométrie d'enregistrement.

12. Dispositif (71) de mise à disposition, qui est agencé pour effectuer le procédé mis en œuvre par ordinateur suivant l'une des revendications précédentes.

13. Dispositif (66) d'imagerie médicale, en particulier dispositif de tomodensitométrie assisté par ordinateur, comprenant un dispositif (71) de mise à disposition suivant la revendication 12.

14. Programme d'ordinateur pour un dispositif (87) de traitement de données ayant des instructions de programme, qui, lors d'une exécution sur un dispositif (87) de traitement de données, exécute un procédé assisté par ordinateur suivant l'une des revendications 1 à 11.

15. Support de données exploitable par ordinateur, comprenant un programme d'ordinateur suivant la revendication 14.

## FIG 1

S1

S2

S3

S4

S5

S6

S7

# FIG 2

FIG 3

FIG 4

# FIG 5

EP 3 816 930 B1

FIG 6

FIG 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012206714 A1
- EP 3467766 A1
- EP 3244368 A1

**In der Beschreibung aufgeführte Nicht-Patentliteratur**

- **BREHM, M. et al.** Cardiorespiratory motion-compensated micro-CT image reconstruction using an artifact model-based motion estimation. *Med. Phys.*, 2015, vol. 42, 1948-1958
- **SAWALL, S. et al.** Low-dose cardio-respiratory phase-correlated cone-beam micro-CT of small animals. *Med. Phys.*, 2011, vol. 38, 1416-1424
- **EHMAN, E. C. et al.** Noise Reduction to Decrease Radiation Dose and Improve Conspicuity of Hepatic Lesions at Contrast-Enhanced 80-kV Hepatic CT Using Projection Space Denoising. *AJR Am J Roentgenol.*, February 2012, vol. 198 (2), 405-11
- **TOMASI, C. et al.** Bilateral Filtering for Grey and Color Images. *proceedings of the 1998 IEEE International Conference on Computer Vision, Bombay, India*, 1998
- **KANG, E. et al.** Cycle-consistent adversarial denoising network for multiphase coronary CT angiography. *Med. Phys.*, 2019, vol. 46, 550-562